(19) 

Europäisches Patentamt
European Patent Office
Office européen des brevets

(11) **EP 3 064 902 B1**

(12) **EUROPÄISCHE PATENTSCHRIFT**

(45) Veröffentlichungstag und Bekanntmachung des Hinweises auf die Patenterteilung:
**01.11.2017   Patentblatt 2017/44**

(51) Int Cl.:
***G01D 5/244*** *(2006.01)*

(21) Anmeldenummer: **15157967.9**

(22) Anmeldetag: **06.03.2015**

(54) **SYSTEM ZUR BESTIMMUNG VON POSITIONEN**

SYSTEM FOR DETERMINING POSITIONS

SYSTÈME DE DÉTERMINATION DE POSITIONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**07.09.2016   Patentblatt 2016/36**

(73) Patentinhaber: **Hexagon Technology Center GmbH**
**9435 Heerbrugg (CH)**

(72) Erfinder:
• **Fritsch, Robert**
**CH-9436 Balgach (CH)**

• **Siercks, Knut**
**CH-9402 Mörschwil (CH)**

(74) Vertreter: **Allwardt, Anke**
**Kaminski Harmann**
**Patentanwälte AG**
**Landstrasse 124**
**9490 Vaduz (LI)**

(56) Entgegenhaltungen:
**EP-A1- 1 043 571      EP-A2- 0 042 179**
**DE-A1- 19 633 337     US-B1- 6 333 511**

**Beschreibung**

Die Erfindung betrifft ein System zur Bestimmung von Positionen entlang einer Vorschubrichtung mit einem Sensor zum Abtasten eines Musters und einem abtastbaren 2D-Muster nach Anspruch 1 sowie ein Verfahren zum Bestimmen von Positionen entlang einer Vorschubrichtung nach Anspruch 12 und ein ebensolches Computerprogrammprodukt.

Systeme zur Bestimmung von Positionen entlang einer Vorschubrichtung sind in vielen Anwendungsbereichen gefordert, in denen die Position eines entlang einer Vorschubrichtung beweglichen Objekts zu bestimmen ist, z.B. die Stellung einer Maschinenkomponente auf einer linearen Achse wie Antriebe oder Schwenkarme. Die dabei erfassten Stellungen können als Positionswerte zu Vermessungszwecken genutzt werden, oder auch für eine Positionierung von Komponenten durch einen Antrieb mit Positionsregelkreis. Solche Positionsbestimmungssysteme finden sich entsprechend in Geräten wie Koordinatenmessmaschinen (CMM), geodätischen Geräten, Roboterarmen oder hydraulischen Aktuatoren. Ein solches System weist in der Regel ein Muster und einen Sensor auf, wobei entweder das Muster oder der Sensor mit dem beweglichen Objekt verbunden ist und Muster und Sensor entlang der Vorschubrichtung relativ zueinander beweglich sind. Der Sensor tastet das Muster ab und erzeugt ein vom abgetasteten Musterabschnitt abhängiges Abtastsignal. Das Muster ist so strukturiert, dass das Abtastsignal sich mit einer Änderung der Relativlage des Sensors zum Muster und damit der zu bestimmenden Position des Objekts ändert. Eine Steuer- und Auswerteeinheit des Systems ermittelt aus dem Abtastsignal anhand hinterlegter Information über das Muster die gesuchte Position. Beispielsweise weist das Muster für eine inkrementelle Positionsbestimmung gleichartige Musterelemente auf, welche mit jeweils gleichem Abstand zueinander in Vorschubrichtung angeordnet sind. Der Sensor tastet jeweils ein Musterelement ab. Als Information ist in der Steuer- und Auswerteeinheit der Abstand der Musterelemente hinterlegt, so dass, ausgehend von einer definierten Nullstellung von Sensor und Muster, aus der Zahl der bei einer Relativbewegung von Sensor und Muster abgetasteten gleichartigen Abtastsignale die Position bestimmbar ist. Nachteilig an Systemen mit inkrementeller Positionsbestimmung ist, dass bei einem Neustart des Systems jedes Mal wieder von einer Null- bzw. Referenzstellung ausgegangen werden muss.

Dagegen erzeugen bei Systemen mit absoluter Positionsbestimmung jeweils einzelne Musterelemente oder Folgen von Musterelementen eindeutige und unterscheidbare Abtastsignale. Dadurch kann einer jeweiligen Relativlage von Sensor zu Muster unmittelbar, d.h. ohne eine Referenzstellung anzufahren, eine eindeutige Position zugeordnet werden.

Idealerweise ändern Sensor und Muster ihre relative Lage zueinander nur in Vorschubrichtung, d.h. ihre Bewegung relativ zueinander weist nur einen Freiheitsgrad (engl.: "degree of freedom", DoF) auf. In der Praxis treten jedoch häufig unerwünschte Abweichungen von dieser Ideallage auf, d.h. die Lage vom Sensor zum Muster variiert unbeabsichtigt oft in wenigstens einer weiteren Raumrichtung d.h. bezüglich wenigstens eines weiteren Bewegungsfreiheitsgrads, z.B. in Form eines Versatzes, einer Verdrehung oder einer Verkippung. Dabei ist der Versatz entweder konstant oder dadurch von der Relativlage abhängig, dass die Vorschubrichtung und Längsachse des Musters nicht exakt parallel zueinander sind. Weiter können Verdrehungen oder Verkippungen des Sensors auftreten, d.h. eine unbeabsichtigte Rotation des Sensors um wenigstens eine seiner Achsen. Derartige Abweichungen von der Ideallage können die Messgenauigkeit beeinträchtigen. Solche Abweichungen möglichst gering zu halten, d.h. die Ideallage möglichst genau einzuhalten, bzw. Abweichungen zu kompensieren erfordert, vor allem bei einem grossen Bewegungsbereich in Vorschubrichtung, einen hohen konstruktiven Aufwand und/oder aufwändige Kalibrierverfahren.

Als Alternative offenbart die US 6333511 ein System zur Bestimmung von Positionen eines Objekts entlang einer Vorschubrichtung, mit dem ausserdem eine leichte Bewegung des Objekts bzw. des Sensors senkrecht zur Vorschubrichtung erkennbar sein soll bzw. eine fluchtende Ausrichtung des Sensors mit der Vorschubrichtung ermöglicht werden soll. Das System basiert auf opto-elektronischer, inkrementeller Positionsbestimmung und weist ein abwechselnd opakes und transparentes Streifenmuster entlang der Vorschubrichtung auf, das von einem Sensor mit einem Array von Detektoren gemäss Durchleuchtverfahren abgetastet wird. Der, vorzugsweise gleichmässige, Abstand der Streifen zueinander ist bekannt und in einer Steuer- und Auswerteeinheit hinterlegt. Das Streifenmuster und der Sensor sind derart aufeinander abgestimmt, dass in jeder Relativlage von Muster zu Sensor immer nur höchstens eine Kante eines Streifens, d.h. eine Grenze zwischen einem opaken und einem transparenten Streifen, von einem Detektor abgetastet wird. Je nach Relativlage eines lichtundurchlässigen Streifens zu dem Detektor (und damit des Musters bzw. der Position eines mit dem Muster verbundenen beweglichen Objekts) wird vom Detektor unterschiedlich viel Licht erfasst, so dass die lichtabhängige Stärke eines jeweils von einem Detektor erzeugten Detektorsignals abhängig ist von der Relativlage.

Dadurch ist die gesuchte Position anhand der Detektorsignalstärke eines einzelnen, geeignet ausgewählten Detektors inkrementell ermittelbar. Ein geeigneter Detektor ist ein solcher, welcher eine Kante eines Streifens abtastet und damit weder die minimal mögliche Lichtstärke erfasst (bei vollständiger Abdunklung durch einen opaken Streifen) noch die maximal mögliche Lichtstärke erfasst (bei vollständiger Beleuchtung durch einen transparenten Streifen). Zur Präzisionssteigerung wird die endgültige Position durch Mittelung aus vielen mittels einzelner Detektoren ermittelten Positionswerten berechnet. Ein Bestimmen von Bewegungen (s.o.) des Objekts bzw. des Sensors senkrecht zur Vorschubrichtung bzw. eine fluchtende Ausrichtung des Sensors in Vorschubrichtung wird nach der US 6333511 ermöglicht durch Verwendung eines Musters aus v-förmigen Streifen bzw. eines zusätzlichen Musters mit Streifen, die parallel zur Vorschubrichtung ausgerichtet sind. Nachteilig an dem System nach der US 6333511 ist, dass erstens keine absolute Positionsbestimmung möglich ist, zweitens ausser einer leichten Bewegung des Objekts bzw. des Sensors senkrecht zur Vorschubrichtung und einer fluchtenden Ausrichtung des Sensors keine weiteren Abweichungen von einer Ideallage des Sensors relativ zum Muster bestimmbar sind und drittens eine Ausrichtung des Detektorarrays entlang der Vorschubrichtung, d.h. eine Abtastung in Vorschubrichtung anstatt orthogonal dazu, zwar möglich, aber mit Präzisionseinbussen verbunden ist. Eine absolute Positionsbestimmung ist bei dem in der US 6333511 offenbarten System nur möglich, indem zusätzliche Positionsbestimmungsmittel bzw. ein zusätzliches, parallel zum ersten Muster sich in Vorschubrichtung erstreckendes Streifenmuster eingesetzt wird. Anhand der zusätzlichen Mittel oder des zusätzlichen Streifenmusters ist eine absolute Position bestimmbar, wodurch die beschriebene inkrementelle Positionsbestimmung absolut verortet werden kann, d.h. dass nur anhand des inkrementellen Musters und des zusätzlichen Positionsbestimmungsmittels bzw. des zusätzlichen Musters letztlich eine absolute Position angegeben werden kann. Nachteilig ist hier, dass die absolute Position nur relativ grob bestimmbar ist.

Die EP 0042179 offenbart ebenfalls ein System zur Bestimmung von Positionen entlang einer Vorschubrichtung, welches ein Bestimmen von Abweichungen einer Ideallage anhand eines Musters mit v-förmigen Streifen ermöglicht. Auch hier wird eine anhand eines Musters inkrementell bestimmte Position durch ein weiteres separates, sich parallel zum ersten Muster in Vorschubrichtung erstreckendes, absolutes Muster absolut verortet, wobei das absolute Muster der EP 0042179 Grobpositionen mittels eines Gray-Codes codiert. Die EP 1043571 offenbart ebenfalls ein System zur Bestimmung von Positionen entlang einer Vorschubrichtung, wobei die Bestimmung von einer Abweichung einer Ideallage mittels zweier zusätzlicher Spuren, die Striche längs zur Messrichtung aufweisen, erfolgt. Die Aufgabe der vorliegenden Erfindung besteht daher in der Bereitstellung eines verbesserten Systems zur Bestimmung von Positionen entlang einer Vorschubrichtung, mit welchem sowohl eine Abweichung eines Sensors aus seiner Ideallage zu einem Muster als auch einfach aber präzise die absolute Position bestimmbar sind.

Diese Aufgabe wird erfindungsgemäss durch die Merkmale der unabhängigen Ansprüche und/oder durch Merkmale der abhängigen Ansprüche gelöst bzw. diese Lösungen weitergebildet.

Die vorliegende Erfindung betrifft ein System zur Bestimmung von Positionen entlang einer Vorschubrichtung. Das System weist ein erstes zweidimensionales Muster (2D-Muster) auf, das sich in Vorschubrichtung erstreckt, und einen in einen ersten Abtastkopf integrierten ersten Sensor mit einem Array von Detektoren zum Abtasten des ersten 2D-Musters und zum Erzeugen eines Abtastsignals. Dabei wird das erste 2D-Muster vom ersten Sensor mit Detektoren eines festgelegten länglichen Abschnitts des Arrays abgetastet. Die Länge dieses Abschnitts ist als Abtastlänge definiert. Die Ausrichtung der Abtastlänge definiert eine Längsachse. Die Abtastlänge entspricht maximal der Ausdehnung des Detektorarrays und ist sehr viel kleiner als die Ausdehnung des ersten 2D-Musters in Vorschubrichtung. Weiter weist das System eine Steuer- und Auswerteeinheit zur Auswertung des Abtastsignals auf. Der erste Sensor und das erste 2D-Muster sind entlang der Vorschubrichtung relativ zueinander beweglich. Das erste 2D-Muster besteht aus Musterelementen und ist dergestalt ausgebildet, dass anhand des ersten 2D-Musters die zu bestimmende Position absolut bestimmbar ist und zudem eine Abweichung von einer Ideallage bezüglich wenigstens eines Bewegungsfreiheitsgrads (neben der Bewegung in Vorschubrichtung) vom ersten Sensor relativ zum ersten 2D-Muster bestimmbar ist. Die Musterelemente bilden dazu jeweils zumindest auf einem Teil der Abtastlänge ein erstes Codewort. Unter Codewörtern werden eindeutig voneinander unterscheidbare Folgen digitaler Werte verstanden. Das erste Codewort codiert jeweils die zu bestimmende Position absolut, so dass das erste 2D-Muster in Vorschubrichtung eine absolute Positionscodespur aus einer Reihe hintereinander angeordneter erster Codewörter bildet. Zudem ist basierend auf dem zu jeder Position gehörenden ersten Codewort die Abweichung von der Ideallage vom ersten Sensor relativ zum ersten 2D-Muster in der jeweiligen Position bestimmbar. Das vom ersten Sensor erzeugte Abtastsignal in der jeweiligen Position korrespondiert mit dem ersten Codewort. In der Steuer- und Auswerteeinheit ist eine Decodierinformation, vorzugsweise eine Decodiertabelle hinterlegt, anhand derer jedem Abtastsignal eindeutig eine absolute Position zuordenbar ist. Weiter sind in der Steuer- und Auswerteeinheit Informationen hinterlegt, anhand derer, basierend auf dem ersten Codewort bzw. dem zugehörigen idealen Abtastsignal, das ermittelte Abtastsignal derart auswertbar ist, dass die Abweichung von der Ideallage vom ersten Sensor zum ersten 2D-Muster zumindest bezüglich eines Bewegungsfreiheitsgrades bestimmbar ist.

Besonders vorteilhaft hinsichtlich des Kosten-Nutzen-Verhältnisses ist es, als Sensor einen Zeilensensor zu verwenden, d.h. einen Sensor mit einem eindimensionallänglichen, linearen Array von Detektoren. Die folgenden Darstellungen beziehen sich daher beispielhaft auf einen Zeilensensor, wenngleich sich die vorliegende Erfindung nicht auf solche Zeilensensoren beschränkt, sondern auch andere Sensoren, z.B. Mehrzeilensensoren bzw. Sensoren mit einem 2D-Array von Detektoren, mit den oben beschriebenen Merkmalen umfasst.

Bevorzugt ist das System zur opto-elektronischen und/oder kapazitiv-elektronischen Mustererkennung bzw. Abtastung des ersten 2D-Musters ausgebildet, wenngleich sich alle physikalischen Wirkprinzipien erfindungsgemäss eignen, die in Systemen zur Bestimmung von Positionen einsetzbar sind. Um zumindest auf einem Teil der Abtastlänge erste Codewörter zu bilden, die die gesuchten Positionen absolut codieren, sind die Musterelemente des ersten 2D-Musters in Vorschubrichtung definiert unterscheidbar ausgestaltet und/oder angeordnet, so dass jeweils durch eine definierte und auf die Abtastlänge abgestimmte Anzahl von Musterelementen eine Folge von digitalen Werten gebildet wird, welche in Vorschubrichtung auf dem gesamten 2D-Muster nur einmal vorkommt. Dadurch ist eine jede Folge eineindeutig und zur absoluten Positionscodierung geeignet. Unterschiedliche Ausgestaltung meint z.B. unterschiedliche Form oder unterschiedliche abtastbare physikalische Eigenschaft der Musterelemente, bei einem optischen ersten 2D-Muster also beispielsweise die Lichtdurchlässigkeit oder das Reflexionsvermögen, unterschiedliche Anordnung meint z.B. unterschiedliche Abfolge oder Neigung der Musterelemente. In jeder Relativlage des ersten Zeilensensors zum ersten 2D-Muster ist jedes Musterelement, das sich, zumindest teilweise, im Bereich der Abtastlänge befindet, von zumindest einem Detektor abtastbar. Dabei ist es nicht wie bei Systemen nach dem Stand der Technik erforderlich, dass eine Kante eines Musterelementes von einem Detektor abtastbar ist. Insofern ist es im Gegensatz zum Stand der Technik nicht nötig die Breite der Musterelemente und die Detektoren des Zeilensensors aufeinander abzustimmen. Bevorzugt ist aber in jeder Relativlage des ersten Zeilensensors zum ersten 2D-Muster von jedem Detektor der Abtastlänge wenigstens ein Musterelement bzw. ein Abschnitt eines Musterelements abtastbar. Die Detektoren auf der Abtastlänge bilden durch Abtasten der ein erstes Codewort codierenden Musterelemente eine Folge elektrischer Signale, wobei dem durch das Abtasten erzeugten Signal jedes Detektors ein digitaler Wert zugeordnet wird. Somit korrespondiert das Abtastsignal jeweils mit dem abgetasteten ersten Codewort. Jedem Codewort ist eine Position entlang der Vorschubrichtung zugeordnet. Diese Zuordnung ist als Decodiertabelle in der Steuer- und Auswerteeinheit hinterlegt, anhand derer das Abtastsignal decodiert und damit die Position ermittelt wird. Als - nicht als Einschränkung zu verstehende - Die absolute Positionscodespur, die das erste 2D-Muster bildet, codiert Positionen beispielsweise binär unter Verwendung eines Pseudo-Random-Codes (PRC) oder, unter Verwendung von Maximalfolgen (Maximum Length Sequence MLS). Weitere Beispiele für Codes, die für die vorliegende Erfindung geeignet sind, finden sich beispielsweise auch in der schweizerischen Patentanmeldung CH704584 vom 2.3.2011 der gleichen Anmelderin, welche hiermit Bestandteil dieser Anmeldung sind. Die Patentanmeldung CH704584 beschreibt mit Bezug auf die Figuren 4 bis 7 die Bereitstellung von Folgen von Musterelementen zur Darstellung von Codes. Die Länge der Folgen ist optimal abgestimmt auf die anwendungsspezifische optimale Auflösung und beliebig wählbar. Die vorgenannten Beispiele sind gleichwohl nicht als Einschränkung zu verstehen.

Durch die erfindungsgemässe Ausgestaltung bzw. Anordnung der Musterelemente steht also auf dem ersten 2D-Muster eine definierte Anzahl von Codewörtern zur Verfügung. Es ist also entlang der Messstrecke mittels der Codewörter eine Reihe absoluter Positionswerte in codierter Form vorhanden. Dadurch sind anhand des ersten 2D-Musters auf der Messstrecke eine diskrete Anzahl an Positionen absolut bestimmbar (wobei die Positionen gegebenenfalls mit weiteren Methoden verfeinerbar sind, siehe unten). Die Schrittweite, d.h. der Abstand der absolut bestimmbaren Positionen ist durch die Ausgestaltung bzw. Anordnung der Musterelemente einstellbar.

Eine Abweichung von einer Ideallage vom ersten Zeilensensor relativ zum ersten 2D-Muster kann bezüglich einer oder beider der neben der Bewegung in Vorschubrichtung verbleibenden zwei translatorischen Bewegungsrichtungen und/oder einer oder mehrerer der drei rotatorischen Bewegungsachsen vorliegen (alle fünf allgemein als Bewegungsfreiheitsgrade bezeichnet). Beispielsweise liegt eine Abweichung von einer Ideallage bezüglich eines rotatorischen Freiheitsgrads dann vor, wenn der erste Zeilensensor aus einer idealen Ausrichtung zum ersten 2D-Muster um eine Achse verdreht ist, die senkrecht auf der Ebene steht, in der das 2D-Muster liegt. Andere Arten der Abweichung von einer Ideallage sind ein Verkippen um die Längsachse des ersten Zeilensensors oder ein Verkippen der Längsachse selbst um eine zu ihr senkrechte und zum ersten 2D-Muster parallele Achse, wodurch die Detektoren entlang des linearen Arrays unterschiedliche Abstände zum ersten 2D-Muster aufweisen, ein seitlicher Versatz des ersten Zeilensensors, d.h. eine Abweichung in eine zur Vorschubrichtung orthogonale Bewegungsrichtung parallel zur 2D-Musterebene, oder eine Änderung des Abstands des ersten Zeilensensors zum ersten 2D-Muster, d.h. eine Abweichung in eine zur Vorschubrichtung und 2D-Musterebene orthogonale Bewegungsrichtung.

Wenigstens eine dieser Arten von Abweichungen von einer Ideallage ist durch das erfindungsgemässe System basierend auf dem ersten Codewort bestimmbar. Dazu codiert ein jedes erstes Codewort neben der absoluten Position in Vorschubrichtung auch die Abweichung(en) in der jeweiligen Lage des ersten Zeilensensors relativ zum ersten 2D-Muster, d.h. in der Regel weist das erste 2D-Muster für die gleiche Absolutposition in Vorschubrichtung zwei oder mehr erste Codewörter auf, die jeweils bezüglich des selben Bewegungsfreiheitsgrads oder der selben Bewegungsfreiheitsgrade zusätzlich zur absoluten Position unterschiedliche Abweichungen von einer Ideallage codieren. Alternativ werden die ersten Codewörter bzw. die korrespondierenden Abtastsignale als Funktion der Abweichung von der jeweiligen Ideallage bezüglich eines oder mehrerer Bewegungsfreiheitsgrade in der Steuer- und Auswerteeinheit hinterlegt, d.h. es wird ausgenutzt, dass die Abweichungen des Zeilensensors aus seiner Ideallage in einer Abweichung des Abtastsignals vom idealen Abtastsignal resultieren, welches an der jeweiligen Position durch das zugehörige erste Codeworte an dieser Position im Zeilensensor erzeugt werden müsste. Alternativ oder zusätzlich wird in Ausführungsformen, in denen das erste Codewort jeweils nur durch einen Teil der abgetasteten Musterelemente in einer Position gebildet wird, aus der Lage der das erste Codewort bildenden Musterelemente innerhalb der Abtastlänge - bzw. der Lage der diese Musterelemente detektierenden Detektoren innerhalb des linearen Arrays - die Abweichung(en) ermittelt. Optional wird die Signalstärke(n) des ersten Zeilensensors und/oder seiner Detektoren relativ zu einer Signalstärke in Ideallage berücksichtigt. In allen Alternativformen sind Musterelemente, die innerhalb der Musterebene geneigt zur Vorschubrichtung ausgerichtet sind, besonders geeignet hinsichtlich der Codierung von Absolutposition und Abweichung.

Das erste 2D-Muster ist in einigen Ausführungsformen dergestalt ausgebildet, dass jeweils eine Abfolge von Musterelementen in Vorschubrichtung ein erstes Codewort bildet. Mit anderen Worten weisen die ersten Codewörter in Vorschubrichtung unterschiedliche und unterscheidbare Ausgestaltung und/oder Anordnung der Musterelemente auf. Entsprechend ist der erste Zeilensensor - oder genauer ausgedrückt seine Längsachse - etwa in Vorschubrichtung ausgerichtet, so dass in jeder Relativlage vom ersten Zeilensensor zum ersten 2D-Muster jeweils Musterelemente abtastbar sind, welche zusammen ein Codewort bilden. Bei Systemen nach dem Stand der Technik führt es zu einer Verminderung der Präzision der Positionsbestimmung, wenn die Ausrichtung der Abtastrichtung von orthogonal zur Vorschubrichtung zu parallel zur Vorschubrichtung geändert wird. Die vorliegende Erfindung bietet hingegen den Vorteil, dass durch die erfindungsgemässe Absolutcodierung eine solche in Bezug zur Vorschubrichtung parallele Abtastrichtung ermöglicht ist, ohne eine Verminderung der Präzision der Positionsbestimmung in Kauf nehmen zu müssen. Die Verwendung nur eines einzigen Musters bzw. nur einer einzigen Positionscodespur ermöglicht unabhängig von der Abtastrichtung des Zeilensensors bezüglich des 2D-Musters schmale Positionsbestimmungssysteme, d.h. kompakte Systeme mit geringer Ausdehnung quer zur Vorschubrichtung. Die beschriebene parallele Abtastrichtung d.h. Abtastung in Vorschubrichtung ermöglicht eine noch weitergehende Verringerung der Musterbreite bzw. noch kompaktere Systeme. Somit bieten derartige erfindungsgemässe Systeme besonders dann Vorteile, wenn absolute Positionen und Abweichungen von einer Ideallage bei räumlich beschränkten Messumgebungen bzw. bei schmalen Maschinenkomponenten zu bestimmen sind.

Optional weisen die durch eine Musterelementabfolge in Vorschubrichtung gebildeten ersten Codewörter in Vorschubrichtung Musterelemente unterschiedlicher und unterscheidbarer Ausgestaltung und/oder Anordnung dergestalt auf, dass das erste 2D-Muster in Vorschubrichtung in eine Vielzahl von jeweils aneinandergrenzenden Bereichen mit Musterelementen zueinander unterschiedlicher Ausgestaltung und/oder Anordnung aufgeteilt ist. Jeder Bereich mit Musterelementen einer definierten Ausgestaltung und/oder Anordnung bildet einen Bereichstyp. Das erste 2D-Muster weist in besagten Ausführungsformen also wenigstens zwei, vorzugsweise mehrere, insbesondere eine Vielzahl von Bereichstypen unterschiedlicher Gestaltung auf, d.h. dass wenigstens zwei Bereiche mit sich unterscheidender, in sich definierter Ausgestaltung und/oder Anordnung von Musterelementen auf dem gesamten ersten 2D-Muster vorkommen. Im Fall eines ersten 2D-Musters mit einer Typenanzahl von nur zwei kommen diese zwei Typen in Vorschubrichtung immer abwechselnd vor, so dass sie unterscheidbar sind. Die Bereiche weisen in Vorschubrichtung jeweils eine Bereichslänge auf. Unter einer Bereichslänge ist dabei die Ausdehnung des jeweiligen Bereichs in Vorschubrichtung zu verstehen, also seine Erstreckung bzw. Länge bezüglich der Vorschubrichtung. Die Abtastlänge des ersten Zeilensensors ist dabei dergestalt auf die Bereichslängen abgestimmt, dass vom ersten Zeilensensor in einer jeden Position gleichzeitig Musterelemente aus wenigstens zwei Bereichen abtastbar sind. Somit ist auf einer Abtastlänge jeweils eine Abfolge von unterscheidbaren Bereichstypen abtastbar. Diese Bereichsabfolgen werden zum Bilden eines jeweiligen ersten Codeworts herangezogen. Optional weisen die Bereiche in Vorschubrichtung wenigstens zwei unterschiedliche Bereichslängen auf und die Bereichslängen dienen ebenfalls zum Bilden eines jeweiligen ersten Codeworts. Dies erfolgt vorzugsweise, indem die auf einer Abtastlänge abtastbaren Bereichsabfolgen und Bereichslängen in einer jeweiligen Position kombiniert zum Codewortbilden herangezogen werden. Hierbei sind die Anzahl der unterschiedlichen Bereichstypen und die Anzahl der unterschiedlichen Bereichslängen aufeinander abgestimmt gewählt, vorzugsweise indem die Anzahlen zueinander teilerfremd sind. Indem erste 2D-Muster aus Bereichstypen und optional stark unterschiedlich gewählten Bereichslängen gebildet sind, ergeben sich vergleichsweise einfache und robuste Absolutcodierungen, da auch einem mit Unsicherheiten bzw. Fehlern behafteten Abtastsignal wenigstens Bereichstypen oder Bereichslängen zuordenbar sind, meist aber beides.

Eine Steigerung der Robustheit und/oder Genauigkeit in einer Fortbildung von Systemen, in denen eine Abfolge von Musterelementen in Vorschubrichtung ein erstes Codewort bildet, wird dadurch erreicht, dass der erste Abtastkopf neben dem ersten Zeilensensor wenigstens einen zweiten Zeilensensor zum Abtasten des ersten 2D-Musters aufweist. Die beiden Zeilensensoren sind vorzugsweise etwa parallel zueinander ausgerichtet und entweder in Vorschubrichtung zueinander definiert beabstandet hintereinander oder nebeneinander angeordnet. Der definierte Abstand eines ersten zu einem zweiten Zeilensensor als Abstand der Sensormitten zueinander wird im Folgenden als Zeilensensorabstand bezeichnet. Sind die beiden Zeilensensoren in Vorschubrichtung hintereinander ausgerichtet, beträgt der Zeilensensorabstand mehr als das Mittel der beiden Zeilensensorlängen, wobei die beiden Zeilensensoren auch durch einen langen Zeilensensor mit zwei voneinander getrennten und zueinander beabstandeten Detektorarrays realisiert sein können. Der Zeilensensorabstand ist bekannt und in der Steuer- und Auswerteeinheit hinterlegt.

In einer anderen Fortbildung des erfindungsgemässen Systems weist der erste Abtastkopf einen ersten Zeilensensor auf, dessen Längsachse etwa orthogonal zur Vorschubrichtung ausgerichtet ist, und einen zweiten Zeilensensor, dessen Längsachse gleichfalls etwa orthogonal zur Vorschubrichtung ausgerichtet ist, wobei die beiden Zeilensensoren etwa parallel zueinander ausgerichtet sind. Der erste und der zweite Zeilensensor weisen zueinander einen definierten Zeilensensorabstand auf und sind vorzugsweise in Vorschubrichtung hintereinander im ersten Abtastkopf integriert. Das erste 2D-Muster weist in dieser Fortbildung Musterelemente auf, die erste Codewörter orthogonal zur Vorschubrichtung bilden. Das Abtastsignal des zweiten Zeilensensors korrespondiert wie dasjenige des ersten Zeilensensors mit einem ersten Codewort, so dass damit ebenfalls eine Position und eine Abweichung von einer Ideallage des zweiten Zeilensensors zum ersten 2D-Muster bestimmbar sind. Die gesuchte Position in Vorschubrichtung wird dann aus den beiden redundant bestimmten Positionen des ersten und des zweiten Zeilensensors, z.B. durch Mittelung, bestimmt, was Präzisionssteigerungen ermöglicht.

Optional wird in Systemen mit zwei zueinander beabstandeten Zeilensensoren anhand der jeweiligen Abweichungen von einer Ideallage des ersten und des zweiten Zeilensensors in Kenntnis des Zeilensensorabstands Abweichungen von einer Ideallage wenigstens bezüglich eines Bewegungsfreiheitsgrades des ersten Abtastkopfs bestimmt, was durch die Verwendung zweier beabstandeter Zeilensensoren noch präziser möglich ist als nur mit einem Zeilensensor. In Ausführungsformen mit besonders hohen Ansprüchen an die Positionsbestimmung werden Abweichungen von einer Ideallage des Abtastkopfs für alle Bewegungsfreiheitsgrade bestimmt, also für die zwei verbleibenden der Translation und die drei der Rotation.

Als weitere Option werden mittels der Abtastung durch die beiden Zeilensensoren zusätzlich oder alternativ Deformationen des Abtastkopfs, welche z.B. thermisch- oder alterungsbedingt sind, bestimmt. Für möglichst grosse Präzision, vor allem in Bezug auf Verdrehungen des Abtastkopfs um eine zur Vorschubrichtung orthogonalen Achse, wird dabei der Zeilensensorabstand möglichst gross gewählt, idealerweise werden die beiden Zeilensensoren an zwei gegenüberliegenden Enden des ersten Abtastkopfs montiert. Als Alternative zur Verwendung zweier Zeilensensoren mit einem linearen Array von Detektoren wird ein Flächensensor verwendet, bei dem nur die beiden äussersten linearen Arrays zum Abtasten verwendet bzw. ausgelesen werden. Selbstverständlich kann ein Flächensensor anstelle eines Zeilensensors auch bei einem ersten Abtastkopf mit nur einem linearen Array von Detektoren verwendet werden. Der erfindungsgemässe Vorteil, dass eine einzige Detektorzeile erheblich schneller auslesbar ist als mehrere Zeilen, bleibt dadurch erhalten, allerdings sind Zeilensensoren vorteilhafterweise kostengünstiger als vergleichbare Flächensensoren.

Weitere Präzisionssteigerungen werden optional in allen erfindungsgemässen Systemen mit aus dem Stand der Technik bekannten Methoden vorgenommen, bei denen die anhand der ersten Codewörter bestimmten bzw. bestimmbaren Positionen verfeinert werden können. Derartige Methoden zur subcodegenauen Positionsbestimmung sind bei opto-elektronischen Systemen z.B. die Bestimmung des oder der Schwerpunkte von Helligkeitsverteilungen innerhalb des linearen Arrays oder einer Auswertung der Signalintensität einiger oder aller Detektoren im Vergleich zu einer Referenzintensität. Die Methoden werden als weitere Option in analoger Weise bei der Bestimmung der Abweichung von einer Ideallage angewandt.

Die vorliegende Erfindung betrifft ausserdem eine Messvorrichtung mit in einer Vorschubrichtung zueinander bewegbaren Gliedern. Zur Bestimmung der Lage der bewegbaren Glieder relativ zueinander entlang einer Messstrecke weist die erfindungsgemässe Messvorrichtung ein erstes erfindungsgemässes System zur Bestimmung von Positionen entlang einer Vorschubrichtung auf. Vorzugsweise ist die Messvorrichtung ausgebildet als Linearencoder bzw. Lineargeber, dabei ist das erste 2D-Muster Teil einer Massverkörperung.

Die Messvorrichtung weist optional wenigstens ein zweites erfindungsgemässes System mit einem zweiten 2D-Muster mit zweiten Codewörtern und einem zweiten Abtastkopf zum Abtasten des zweiten 2D-Musters auf. Das zweite 2D-Muster des zweiten Systems erstreckt sich in Vorschubrichtung parallel zum ersten 2D-Muster des ersten Systems. Jedes System aus 2D-Muster und zugehörigem Abtastkopf ist für sich geeignet, eine absolute Position entlang der Vorschubrichtung und Abweichungen des jeweiligen Zeilensensors bzw. Abtastkopfs von einer Ideallage zum jeweiligen 2D-Muster zu bestimmen. Die Systeme können zueinander identisch ausgeführt sein. Der erste Abtastkopf und der zweite Abtastkopfs sind gemeinsam bewegbar, wozu die beiden Abtastköpfe bevorzugt in einem Objekt, beispielsweise einer gemeinsamen Halterung oder einer Maschinenkomponente, deren Stellung auf einer linearen Achse wie Antriebe oder Schwenkarme zu bestimmen ist, integriert sind, welches in Vorschubrichtung, relativ zum ersten und zweiten 2D-Muster, bewegbar ist.

Optional sind die erste und das zweite dazu parallele 2D-Muster in unterschiedlichen Ebenen angeordnet. Der Winkel, den die beiden Musterebenen miteinander einschliessen, ist bekannt und in der Steuer- und Auswerteeinheit hinterlegt und ist im Speziellen zumindest ungefähr ein rechter Winkel, also z.B. 90°±1° oder 90°±3°. Aus den Abweichungen von einer Ideallage des ersten Zeilensensors bzw. des ersten Abtastkopfs und des zweiten Zeilensensors bzw. des zweiten Abtastkopfs werden durch diese dreidimensionale Anordnung der beiden 2D-Muster bzw. des ersten und des zweiten Systems in Kenntnis des Winkels zwischen diesen beiden 2D-Musterebenen Abweichungen von einer Ideallage des Objekts, in dem die beiden Abtastköpfe integriert sind, bezüglich mehrerer, vorzugsweise aller, Bewegungsfreiheitsgrade ermittelt. Somit sind durch eine solche erfindungsgemässe Messvorrichtung neben der absoluten Position eines entlang einer Vorschubrichtung bewegbaren Objekts auch Verkippungen, Verdrehungen etc. des Objekts bzw. Abweichungen des Objekts relativ zu einer idealen Ausrichtung im Raum - also dreidimensional - bestimmbar.

Ist eine Positionsbestimmung auf vergleichsweise langen Messstrecken, d.h. eine langhubige Messvorrichtung, gefordert, erfordert dies entsprechend lange 2D-Muster. Damit einhergehend sind vergleichsweise komplexe Absolutcodierungen und Steuer- und Auswerteeinheiten notwendig mit Nachteilen hinsichtlich Auswertegeschwindigkeit und Herstellungskosten. Nachteilig sind weiter hohe Anforderungen bezüglich Herstellung und Montage eines solch langen 2D-Musters. Derartige Nachteile werden durch die folgende Fortbildung erfindungsgemässer Messvorrichtungen mit einem ersten und zweiten System mit parallelen ersten und zweiten 2D-Mustern vermieden. Die Messvorrichtung weist in dieser Fortbildung ein erstes System mit mehreren, identischen ersten 2D-Mustern auf, die in Vorschubrichtung hintereinander montiert sind und zusammen die gesamte Messstrecke abdecken. Jedes der ersten 2D-Muster ermöglicht nach wie vor erfindungsgemäss für sich die Bestimmung einer absoluten Position und einer Abweichung von einer Ideallage auf der gesamten Länge des jeweiligen Musters. Da die ersten 2D-Muster untereinander identisch sind, sind jedoch entlang der gesamten Messstrecke mehrere identische erste Codewörter vorhanden, so dass Positionen entlang der gesamten Messstrecke - im Folgenden als Messstreckenposition bezeichnet - aufgrund dieser Vieldeutigkeiten allein aufgrund der Abtastung eines ersten Codewortes nicht eindeutig bestimmbar sind. Diese Vieldeutigkeiten werden nun beseitigt mittels wenigstens eines zweiten erfindungsgemässen Systems mit einem zweiten Abtastkopf mit Zeilensensor zum Abtasten mehrerer zueinander identischer zweiter 2D-Muster mit zweiten Codewörtern, die in Vorschubrichtung hintereinander und parallel zu den ersten 2D-Mustern montiert sind. Die ersten 2D-Muster des ersten Systems und zweiten 2D-Muster des zweiten Systems sind derart aufeinander abgestimmt aufgebaut, dass entlang der gesamten Messstrecke in jeder Relativlage vom bewegbaren Objekt zu den 2D-Mustern eine jede Codewortkombination aus erstem Codewort und zweitem Codewort nur ein einziges Mal vorkommt. Damit ist jede Codewortkombination aus erstem Codewort und zweitem Codewort eineindeutig. In den Steuer-und Auswerteeinheiten bzw. einer gemeinsamen Steuer-und Auswerteeinheit für beide Systeme sind Informationen hinterlegt, anhand derer jeder dieser eineindeutigen Codewortkombinationen eine absolute Messstreckenposition absolut zuordenbar ist. Vorzugsweise sind die Anzahl der ersten Codewörter auf dem ersten 2D-Muster und die Anzahl der zweiten Codewörter auf dem zweiten 2D-Muster möglichst ähnlich gross und zueinander teilerfremd.

Die Messvorrichtung zur Bestimmung von Positionen entlang einer Vorschubrichtung ist in einigen Ausführungsformen ausgebildet als 3D-Koordinatenmessmaschine (CMM). An allen drei Mess- bzw. Koordinatenachsen der CMM ist je wenigstens ein erfindungsgemässes System installiert, so dass durch die erfindungsgemässe Positions- und Abweichungsbestimmung die Position einer Abtastspitze der CMM dreidimensional absolut und präzise bestimmbar ist.

Durch das Bestimmen einer Abweichung von einer Ideallage eines Zeilensensors bzw. bewegbaren Objekts bzw. Abtastkopfs relativ zu einem 2D-Muster bzw. einer Messachse und damit der Möglichkeit, diese Abweichung bei der Bestimmung der Position zu berücksichtigen bzw. die Position entsprechend der bestimmten Abweichung zu korrigieren, sind also durch das erfindungsgemässe System bzw. die erfindungsgemässe Messvorrichtung Positionen absolut und präzise bestimmbar bei gleichzeitig vergleichsweise hohen Toleranzen bei Fertigung, Montage und Alterungsbeständigkeit der verwendeten Materialien. Dies betrifft die Vorrichtung selbst und/oder Maschinenteile, die die Vorrichtung tragen wie z.B. Führungskomponenten zum Verschieben des Abtastkopfs in Vorschubrichtung oder Musterträger, auf denen das 2D-Muster aufgebracht ist. Dies ist besonders vorteilhaft bei einer CMM, bei der Verschiebungen in drei Raumrichtungen zusammenwirken, da durch die Abweichungsbestimmungen mittels erfindungsgemässer Systeme Korrekturwerte für die absolute 3D-Positon des Abtastkopfs bestimmbar sind, wodurch die ansonsten hohen konstruktiven Anforderungen und/oder aufwändigen Kalibrierverfahren entfallen können oder bei gleichen konstruktiven Anforderungen bzw. gleichem Kalibrieraufwand präzisere Positionsbestimmungen ermöglicht sind.

Somit ergeben sich durch die vorliegende Erfindung Präzisionssteigerungen und/oder Kostenvorteile bei der Herstellung, Montage und/oder Wartung von Positionsbestimmungssystemen bzw. Messvorrichtungen. Kostenvorteile ergeben sich auch dadurch, dass zur absoluten Positionsbestimmung keine zusätzlichen Positionsbestimmungsmittel oder mehrere Codespuren nötig sind, sondern Positionen absolut unter Verwendung nur einer einzigen Codespur bzw. eines einzigen 2D-Musters bestimmbar sind. Diese einzige Positionscodespur ist bei erfindungsgemässen Ausführungsformen mit Ausrichtung des Zeilensensors in Vorschubrichtung besonders schmal und damit kostengünstig ausführbar, ohne Präzisionseinbussen in Kauf nehmen zu müssen. Zudem eignet sich die vorliegende Erfindung vorteilhaft für verschiedene Arten von Skalen, z.B. auch für Winkel- oder Kugelskalen.

Die vorliegende Erfindung betrifft ausserdem ein Verfahren zum Bestimmen von Positionen entlang einer Vorschubrichtung mit einem erfindungsgemässen System. Gemäss dem erfindungsgemässen Verfahren werden Musterelemente des ersten 2D-Musters durch den ersten Zeilensensor auf einer Abtastlänge abgetastet. Weiter wird ein Abtastsignal erzeugt, welches mit dem durch abgetastete Musterelemente gebildeten ersten Codewort korrespondiert. Dem Abtastsignal wird anhand von in der Steuer- und Auswerteeinheit hinterlegter Decodierinformation eine absolute Position zugeordnet und basierend auf dem ersten Codewort und in der Steuer- und Auswerteeinheit hinterlegter Information wird anhand des Abtastsignals eine Abweichung von einer Ideallage des ersten Zeilensensors zum ersten 2D-Muster bestimmt.

Im Rahmen des Verfahrens zum Bestimmen von Positionen entlang einer Vorschubrichtung wird optional die Abweichung von einer Ideallage unter Lösen eines mathematischen Systems linearer Kongruenzen bestimmt, welches anhand des ersten Codeworts durch Auswertung des Abtastsignals erstellt ist und das Abtastsignal als Ganzes oder Abschnitte davon beschreibt. Das Lösen erfolgt vorzugsweise unter Verwendung des Chinesischen Restsatzes (engl:

Chinese remainder theorem), alternativ werden andere zum Lösen linearer Kongruenzen geeignete mathematische Verfahren eingesetzt.

Für eine oben beschriebene erfindungsgemässe Messvorrichtung, welche einen ersten Abtastkopf zum Abtasten eines erstes 2D-Musters mit ersten Codewörtern und wenigstens einen zweiten Abtastkopf zum Abtasten wenigstens eines zweiten, zum ersten 2D-Muster in Vorschubrichtung parallelen, 2D-Musters mit zweiten Codewörtern aufweist, wobei der erste und der zweite Abtastkopf gemeinsam in Vorschubrichtung bewegbar sind, wird das erfindungsgemässe Verfahren wie folgt fortgebildet. Das erste und das zweite 2D-Muster sind dergestalt ausgebildet und angeordnet, dass jede Kombination eines ersten mit einem zweiten Codewort eineindeutig ist. Die beiden 2D-Muster werden in einem Schritt abgetastet, d.h. das Abtasten erfolgt in gleich bleibender Relativlage beider Abtastköpfe zu den 2D-Mustern. Das durch die abgetasteten Musterelemente des ersten 2D-Musters gebildete erste Codewort wird mit dem durch die abgetasteten Musterelemente des zweiten 2D-Musters gebildeten zweiten Codewort zu einer Codewortkombination kombiniert. Unter einer solchen Codewortkombination wird selbstverständlich auch die entsprechende Kombination der korrespondierenden Abtastsignale bzw. der zugeordneten absoluten Positionen verstanden. Anhand dieser Codewortkombination wird eindeutig eine Messstreckenposition bestimmt. Im Rahmen des Verfahrens wird optional anhand der Abtastsignale ein mathematisches System linearer Kongruenzen erstellt und unter Verwendung des Chinesischen Restsatzes oder eines anderen geeigneten mathematischen Verfahrens gelöst.

Bei einer als CMM ausgebildeten erfindungsgemässen Messvorrichtung wird das Verfahren optional wie folgt fortgebildet. Mittels der CMM ist eine 3D-Koordinate zu bestimmen, z.B. durch mechanisches oder optisches Abtasten mit einem Abtastkopf. Die 3D-Position der Abtastspitze, also deren Position im Raum, und damit die gesuchte 3D-Koordinate wird berechnet aus den für jede Koordinatenachse mit je einem erfindungsgemässen System bestimmten absoluten Positionen und aus den Abweichungen von der Ideallage der jeweiligen Zeilensensoren bzw. der jeweiligen Abtastköpfe. Beispielsweise wird getrennt für eine jede Messachse die absolut bestimmte 1D-Position, also Position bezüglich einer Raumrichtung, mit den bestimmten Abweichungen für den oder die Abtastköpfe des jeweiligen Positionsbestimmungssystems dieser Messachse korrigiert und anschliessend die 3D-Position aus den so korrigierten 1D-Positionen berechnet. Oder es werden alle bezüglich einer jeweiligen Raumrichtung bestimmten Abweichungen, und zwar an allen Messachsen der CMM ermittelte Abweichungen, verwendet, um die Position für diese jeweilige Raumrichtung an einer Messachse der CMM zu korrigieren.

Die vorliegende Erfindung beinhaltet des Weiteren ein Computerprogrammprodukt oder Computer-Datensignal, verkörpert durch eine elektromagnetische Welle, mit Programmcode, zur Steuerung bzw. Durchführung des oben beschriebenen Verfahrens zum hochpräzisen Bestimmen von Positionen bzw. Relativlagen. Die Kontrolle und Ausführung des Verfahrens kann durch das System selbst erfolgen oder mit Hilfe von geeigneten Datenübertragungsvorrichtungen ganz oder teilweise extern, z.B. durch eine angeschlossene Rechnereinheit.

Das erfindungsgemässe System, die erfindungsgemässe Messvorrichtung und das erfindungsgemässe Verfahren zum hochpräzisen Bestimmen von Positionen entlang einer Vorschubrichtung werden nachfolgend anhand von in den Zeichnungen schematisch dargestellten Ausführungsbeispielen rein beispielhaft näher beschrieben. Gleiche Elemente sind in den Figuren mit gleichen Bezugszeichen gekennzeichnet. Die beschriebenen Ausführungsformen sind in der Regel nicht massstabsgetreu dargestellt und sie sind auch nicht als Einschränkung zu verstehen.

Im Einzelnen zeigen

Fig.1 perspektivisch eine schematische Übersichtsdarstellung eines erfindungsgemässen Systems zur Bestimmung von Positionen entlang einer Vorschubrichtung;

Fig.2a-c schematische Darstellungen in Aufsicht von Teilbereichen von Ausführungsformen eines erfindungsgemässen Systems mit 2D-Muster und Zeilensensor;

Fig.3a,b schematische Darstellungen in Aufsicht von Teilbereichen eines erfindungsgemässen Systems mit Abweichungen von einer Ideallage;

Fig.4a-c schematische Darstellungen von Teilbereichen eines erfindungsgemässen Systems mit weiteren Abweichungen von einer Ideallage;

Fig.5a,b schematische Darstellungen eines erfindungsgemässen Systems mit zwei Zeilensensoren;

Fig.6a,b perspektivisch schematische Darstellungen von Ausführungsformen einer erfindungsgemässen Messvorrichtung; und

Fig.7 eine perspektivische schematische Darstellung einer als Koordinatenmessmaschine ausgebildeten Messvorrichtung.

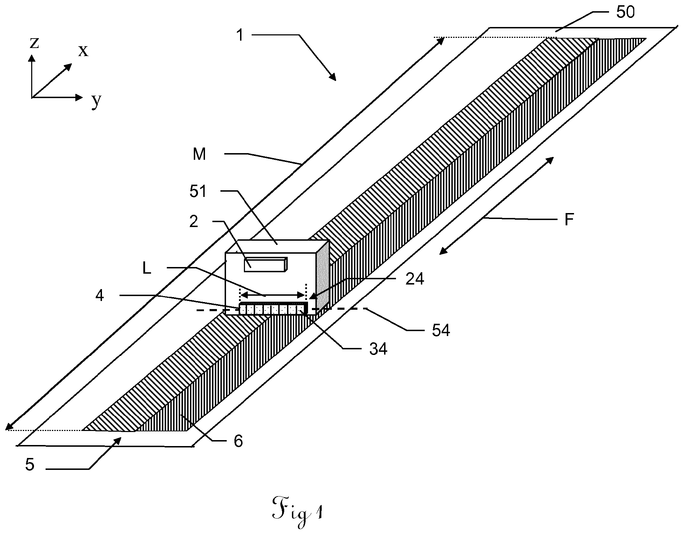

Fig.1 zeigt eine schematische Übersichtsdarstellung in perspektivischer Ansicht eines erfindungsgemässen Systems 1 zur Bestimmung von Positionen entlang einer Vorschubrichtung F. Dargestellt sind zudem die drei Raumachsen x,y und z. Die Vorschubrichtung F entspricht der x-Richtung. Das System 1 weist ein erstes zweidimensionales Muster (kurz: 2D-Muster) 5 aus Musterelementen 6 auf, welches auf einem Musterträger 50 aufgebracht ist. Das System 1 ist so positioniert, dass das erste 2D-Muster 5 in der xy-Ebene liegt und die Längsachse des ersten 2D-Musters 5 gleich der x-Achse ist, so dass sich das erste 2D-Muster in Vorschubrichtung F erstreckt. Das System 1 weist weiter einen ersten Abtastkopf 51 auf mit einer Steuer- und Auswerteeinheit 2 und mit einem ersten Sensor 4 zum Abtasten des ersten 2D-Musters 5, wobei der Sensor 4 eine Abtastlänge L aufweist, die bekannt und in der Steuer- und Auswerteeinheit 2 hinterlegt ist. Die Abtastlänge L des Sensors 4 definiert eine Längsachse 54 des Sensors 4.

Der erste Sensor 4 weist einen Array 24 mit Detektoren 34 auf, von denen mindestens ein Teil in Richtung der Längsachse 54 und der Abtastlänge L angeordnet ist. Die Platzierung der Detektoren 34 im Array 24 ist bekannt und in der Steuer- und Auswerteeinheit 2 hinterlegt. In den Beispielen ist der erste Sensor 4 (und entsprechend der weiter unten beschriebenen zweite Sensor) als Zeilensensor ausgebildet, so dass also das Array 24 linear ist, also eine lineare Anordnung von Detektoren 34 aufweist. Alternativ werden z.B. zum Zwecke einer weiteren Präzisionssteigerung andersartige Sensoren wie z.B. Flächen- oder Mehrzeilensensoren verwendet. Die Abtastlänge L entspricht maximal der Länge des linearen Arrays 24. Im Beispiel liegt die Längsachse 54 des ersten Zeilensensors 4 in einer zur xy-Ebene parallelen Ebene und erstreckt sich in y-Richtung, so dass der lineare Array 24 bezüglich der Vorschubrichtung F etwa senkrecht ausgerichtet ist. Alternativ ist die Längsachse 54 des ersten Zeilensensors 4 so in x-Richtung angeordnet, dass der lineare Array 24 zumindest ungefähr in Vorschubrichtung F ausgerichtet ist. Der erste Abtastkopf 51 und damit der in den ersten Abtastkopf 51 integrierte erste Zeilensensor 4 sind relativ zum Musterträger 50 und damit zum ersten 2D-Muster 5 in Vorschubrichtung F beweglich. Der maximal mögliche Bewegungsbereich dieser Relativbewegung legt eine Messstrecke M fest, auf welcher Positionen bestimmbar sind. Zur Bestimmung einer Position des Abtastkopfes 51 auf der Messstrecke M tastet der erste Zeilensensor 4 in der gegebenen Position das erste 2D-Muster 5 ab. Daraus resultiert ein Abtastsignal, welches von der Steuer- und Auswerteeinheit 2 ausgewertet wird. Alternativ ist es denkbar, dass das Abtastsignal von einer Kommunikationseinheit des Systems an einen externen Rechner übermittelt wird, welcher anstelle der Steuer- und Auswerteeinheit 2 die Auswertung des Abtastsignals vornimmt und optional an das System 1 zurück überträgt. Unter einer Position wird dabei der jeweils aktuelle Aufenthaltsort des ersten Abtastkopfs 51 auf der Messstrecke M während des Abtastens des Musters verstanden. Zur Mustererkennung sind alle physikalischen Wirkprinzipien geeignet, wie induktive, kapazitive, magnetische oder optische Messprinzipien, bei denen elektrisch, magnetisch oder optisch abtastbare Musterelemente 6 von einem entsprechend ausgebildeten ersten Zeilensensor 4 abgetastet werden. Für ein optisches Messprinzip wird beispielsweise ein erstes 2D-Muster 5 mit reflektierenden und nicht-reflektierenden oder transparenten und opaken Musterelementen 6 beleuchtet bzw. durchleuchtet und das reflektierte bzw. transmittierte Licht von einem photosensitiven CCD- oder CMOS-Lineararray erfasst. Für ein kapazitives Messprinzip wird ein erstes 2D-Muster 5 mit Elektroden als Musterelemente 6 verwendet, welche mit Elektroden eines entsprechenden ersten Zeilensensors 4 eine durch die Relativbewegung veränderliche Kapazität bilden.

Das System 1 ist derart ausgebildet, dass anhand des ersten 2D-Musters 5 die Position in Vorschubrichtung F absolut bestimmbar ist, wozu die Musterelemente 6 eineindeutige Codewörter bilden, welche die Positionen absolut codieren. Ausserdem ist anhand des ersten 2D-Musters 5 eine Abweichung von einer Ideallage des Zeilensensors 4 (und damit des ersten Abtastkopfs 51) relativ zum ersten 2D-Muster 5 bestimmbar. Dies wird anhand der weiteren Figuren näher beschrieben.

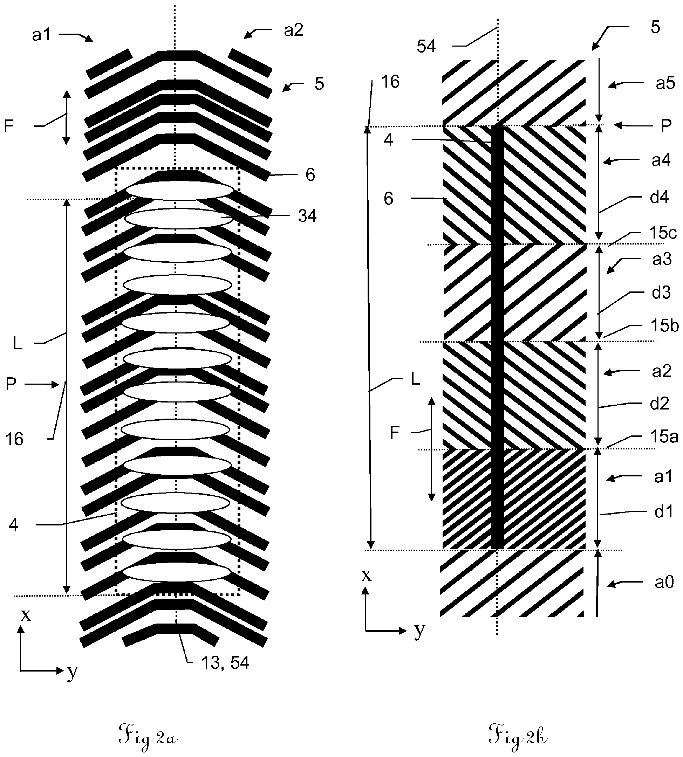

Fig. 2a zeigt rein schematisch einen Teilbereich eines erfindungsgemässen Systems 1 zur Bestimmung von Positionen entlang einer Vorschubrichtung F. Dargestellt sind in Aufsicht, d.h. entlang der x-Achse, ein Ausschnitt eines erfindungsgemässen ersten 2D-Musters 5 aus Musterelementen 6 und schematisch (angedeutet durch ein von einer gepunkteten Linie gebildetes Rechteck) ein erster Zeilensensor 4 zum Abtasten des ersten 2D-Musters 5. Das erste 2D-Muster 5 und der erste Zeilensensor 4 befinden sich bezogen auf die Vorschubrichtung F entlang der Messstrecke M in einer Position P relativ zueinander.

Die Längsachse 54 des ersten Zeilensensors 4 ist in Vorschubrichtung F und in einer zur Musterebene x-y parallelen Ebene ausgerichtet, idealerweise verläuft die Längsachse 54 somit exakt in x-Richtung, wobei Fertigungstoleranzen und andere Abweichungen hiervon, die sich z.B. während des Gebrauchs ergeben, mit unter die Begriffe "parallel" bzw. "ausgereichtet in x-Richtung" fallen. Entsprechend kann das erste 2D-Muster 5 sehr schmal (Breite in y-Richtung) ausgebildet sein, vergleichsweise schmaler als Systeme nach dem Stand der Technik. Eine solch geringe Ausdehnung des 2D-Musters 5 bzw. des ersten Zeilensensors 4 und damit des Systems 1 quer zur Vorschubrichtung F bietet Vorteile in engen Messumgebungen bzw. hinsichtlich eines kompakten Systemaufbaus. Da der erste Zeilensensor 4 durch die vorliegende Ausrichtung eine Ausdehnung in x-Richtung hat, ist ein beliebig wählbarer Referenzpunkt 16 auf der Abtastlänge L festzulegen, der als Referenz für die Bestimmung der Position P des Abtastkopfs in Vorschubrichtung F dient. Im Beispiel ist die Mitte der Abtastlänge L als Referenzpunkt 16 festgelegt.

Die Musterelemente 6 sind dergestalt ausgebildet und angeordnet, dass sie jeweils auf einer Abtastlänge L ein eineindeutiges erstes Codewort bilden, also eine eineindeutige Folge digitaler Werte. Hierzu weist das erste 2D-Muster 5 gleichartige Musterelemente 6 auf, die durch eine festgelegte regelmässig variierende oder pseudozufällige Abfolge definiert unterschiedlich angeordnet sind. Alternativ oder zusätzlich codieren die Musterelemente 6 durch definiert unterscheidbare Ausgestaltung, beispielsweise hinsichtlich ihrer Form (z.B. Breite, Länge in der x-y-Ebene) und/oder ihrer physikalisch beim Abtasten wirkenden Eigenschaften (z.B. bei einem optischen Wirkprinzip ihre Transparenz oder ihr Reflexionsvermögen). Im Beispiel sind gleichgestaltete Musterelemente 6 bezüglich der Vorschubrichtung F definiert variierend angeordnet, so dass eineindeutigen erste Codewörter gebildet werden, welche die Positionen codieren. Das erste 2D-Muster 5 weist dabei zwei zueinander symmetrische Bereiche a1 und a2 auf mit einer Symmetrieachse 13, die in Vorschubrichtung F verläuft.

Jedes erste Codewort kommt entlang der Vorschubrichtung F nur ein einziges Mal auf der Messstrecke M bzw. dem Musterträger 50 vor. Das erste 2D-Muster 5 bildet also durch die Ausgestaltung und/oder Anordnung der Musterelemente 6 bezogen auf die Vorschubrichtung F eine absolute Positionscodespur, beispielsweise aus einem Pseudo-Random-Code (PRC) oder gemäss einer Maximalfolge (Maximum Length Sequence MLS) bei binärer oder höherwertiger Codierung. Somit handelt es sich bei dem vorliegenden System um einen Einspur-Absolutcodierer, d.h. die Positionen sind absolut unter Verwendung nur einer einzigen Positionscodespur bestimmbar. Die Auflösung der Positionsbestimmung, d.h. die Anzahl der bestimmbaren Positionen auf der Messstrecke, ist dabei durch die Anzahl der ersten Codewörter in Vorschubrichtung auf der Messstrecke M einstellbar, welche wiederum durch die Ausgestaltung und/oder Anordnung der Musterelemente 6 in Abstimmung mit dem verwendeten ersten Zeilensensor 4 einstellbar ist.

Der erste Zeilensensor 4 tastet das erste 2D-Muster 5 mit seinen innerhalb der Abtastlänge L angeordneten Detektoren 34 ab, wobei von ihm ein Abtastsignal in Form einer Folge digitaler Werte erzeugt wird, welches mit dem von den abgetasteten Musterelementen 6 gebildeten ersten Codewort korrespondiert. Das System 1 arbeitet im Beispiel mit kapazitivem Wirkungsprinzip, wozu die - rein schematisch dargestellten - Musterelemente 6 und die Detektoren 34 des ersten Zeilensensors 4 als Elektroden ausgebildet sind. Die Musterelektroden 6 und Sensorelektroden 34 sind kapazitiv miteinander gekoppelt. Die kapazitive Kopplung ist von der Relativlage vom ersten Zeilensensor 4 zum ersten 2D-Muster 5 abhängig, so dass in der jeweiligen Relativlage auf einer Abtastlänge L jeweils durch die mit den Detektorelektroden 34 kapazitiv gekoppelten Musterelektroden 6 ein eineindeutiges erstes Codewort gebildet wird. Bei einem optischen Messprinzip wird durch die Musterelemente 6 vorzugsweise eine von der Position entlang der Messstrecke abhängige Hell-Dunkel-Abfolge der zu erfassenden Signale auf einer Abtastlänge L gebildet. Diese Hell-Dunkel-Abfolge bildet ein erstes Codewort, das jeweils eine zu bestimmende Position eineindeutig und absolut codiert.

Das Abtastsignal des ersten Zeilensensors 4 wird als Digitalwert ausgegeben, welcher die abgetastete codierende Eigenschaft der Musterelemente 6 als Folge digitaler Werte wiedergibt (bei einem optischem Wirkungsprinzip z.B. indem 1=hell zugeordnet wird ab einem gewissen Schwellwert und entsprechend 0=dunkel unterhalb dieses Schwellwerts). Das Abtastsignal des ersten Zeilensensors 4 wird von der Steuer- und Auswerteeinheit 2 decodiert und hieraus die gesuchte Position P absolut bestimmt, wozu in der Steuer-und Auswerteeinheit 2 eine Decodiertabelle hinterlegt ist, anhand derer jedem Abtastsignal eine absolute Position P zuordenbar ist. Mit anderen Worten wird aus einer in der Steuer- und Auswerteeinheit 2 hinterlegten endlichen Menge von absoluten, diskreten Positionen P diejenige ausgewählt, welche der durch das Abtastsignal verkörperten Folge digitaler Werte zugeordnet ist, wobei diese Zuordnung eineindeutig ist. Die Zuordnung wird vorzugsweise durch einen Kalibrierdurchlauf erstellt, bei der den mit den ersten Codewörtern korrespondierenden Abtastsignalen absolute Positionen anhand eines Eichmasses zugeordnet werden.

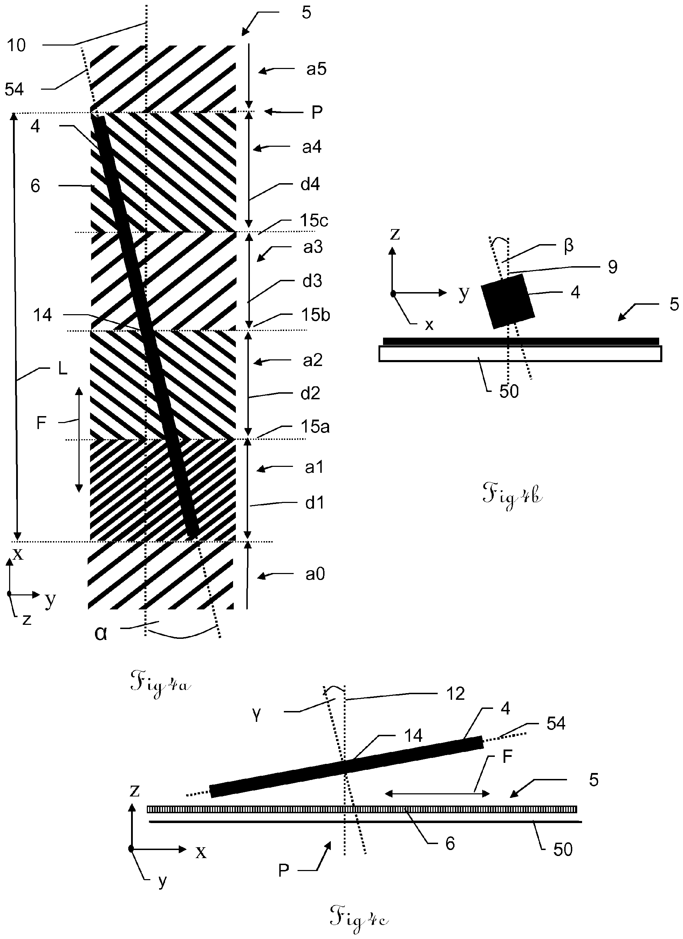

Das erste 2D-Muster 5 ist dergestalt ausgebildet, dass auch dann ein mit einem ersten Codewort korrespondierendes Abtastsignal erzeugbar und damit also die gesuchte Position P entlang der Messstrecke M bestimmbar ist, wenn eine Abweichung des Abtastkopfs von seiner Ideallage gegeben ist. Zudem ist anhand des 2D-Musters die Abweichung von der Ideallage selbst bestimmbar. Der erste Zeilensensor 4 und das 2D-Muster 5 befinden sich dann in Ideallage zueinander, wenn kein seitlicher Versatz $\Delta y$ vorliegt - im dargestellten Beispiel also die Längsachse 54 des Zeilensensors 4 sich mit der Symmetrieachse 13 des Musters 5 deckt, oder mit anderen Worten keine Verschiebung in y-Richtung vorliegt -, wenn weiters keine Verdrehung um die z-Achse vorliegt (also die Längsachse 54 des Zeilensensors 4 parallel zur x-Achse ist - Gegenbeispiel vgl. Fig. 4a), keine Verkippung um die y-Achse vorliegt (also der erste Zeilensensor 4 nicht aus der 0°-Stellung um die y-Achse rotiert ist - Gegenbeispiel vgl. Fig. 4c) und keine Verkippung um die x-Achse vorliegt (also der erste Zeilensensor 4 nicht aus der 0°-Stellung um die x-Achse rotiert ist - Gegenbeispiel vgl. Fig. 4b). Anders formuliert bleiben erster Zeilensensor 4 und 2D-Muster 5 dann in einer Ideallage zueinander, wenn der erste Zeilensensor 4 und das erste 2D-Muster 5 in einer wohldefinierten und bekannten Ausgangslage und Ausgangsausrichtung zueinander angeordnet sind und ausser der gewollten Translation in Vorschubrichtung F keine sonstige Bewegung erfolgt bzw. erfolgt ist. Zum Bestimmen einer Abweichung von der Ideallage vom ersten Zeilensensor 4 zum ersten 2D-Muster 5 weisen die Musterelemente 6 nach Fig. 2a Abschnitte auf, die geneigt zur Vorschubrichtung F in der Musterebene x-y angeordnet sind. Das erfindungsgemässe Bestimmen einer Position P und einer oder mehrerer der genannten Abweichungen von der Ideallage wird anhand der folgenden Figuren näher beschrieben.

Fig. 2b zeigt einen Teilbereich einer weiteren Ausführungsform des erfindungsgemässen Systems 1. Dargestellt sind schematisch der erste Zeilensensor 4 und ein Ausschnitt eines ersten 2D-Musters 5 in Aufsicht. Der Zeilensensor 4 ist wie in der Ausführungsform nach Fig. 2a mit seiner Längsachse 54 etwa entlang der Vorschubrichtung F ausgerichtet.

Der Referenzpunkt 16 auf dem ersten Zeilensensor 4 zur Positionsbestimmung des Abtastkopfes ist im Beispiel als das Ende bzw. der Anfang der Abtastlänge L festgelegt.

Die Musterelemente 6 sind erfindungsgemäss dergestalt unterschiedlich angeordnet, dass sie auf einer Abtastlänge L ein eineindeutiges Codewort bilden und das erste 2D-Muster 5 in Vorschubrichtung F in eine Vielzahl von Bereichen a1, a2, a3, a4, ..., ai unterschiedlicher Anordnung der Musterelemente 6 gegliedert ist. Dabei wird die unterschiedliche Anordnung der Musterelemente 6 durch Variation der Ausrichtung (Neigung zur x-Richtung) der Musterelemente 6, bzw. der Musterelementperiodizität, d.h. Anzahl der abtastbaren Eigenschaftswechsel (z.B. bei optischem Wirkprinzip opak-transparent) auf einem Messstreckenstück, bewirkt. Basierend auf der unterschiedlichen Anordnung der Musterelemente 6 weist das erste 2D-Muster also eine Vielzahl aneinandergrenzender unterscheidbarer Bereiche a1-ai auf. Alternativ oder zusätzlich sind derartige Bereiche a1-ai durch andersartig unterschiedliche Anordnung und/oder unterschiedliche Ausgestaltung der Musterelemente 6 erzeugbar. Bereiche mit unterschiedlicher Anordnung und/oder unterschiedlicher Ausgestaltung der Musterelemente 6 bilden unterschiedliche Bereichstypen, so dass das erste 2D-Muster eine definierte Anzahl von zueinander unterschiedlichen Bereichstypen aufweist. Gleich ausgebildete Bereiche a1-ai, werden als gleicher Bereichstyp bezeichnet und können auf dem ersten 2D-Muster 5 auch mehrfach vorkommen. Im vorliegenden einfachen Beispiel weist das Muster drei Bereichstypen auf, dargestellt sind z.B. in den Bereichen a0, a3 sowie a5 (Typ 1), a1 (Typ 2) und a2 sowie a4 (Typ 3).

Die Bereichsgrenzen 15a-15i verlaufen gemäss der Anordnung der Musterelemente 6 in y-Richtung d.h. idealerweise orthogonal zur Vorschubrichtung F. Der Abstand der Bereichsgrenzen 15a-15i wird als Bereichslänge d1-di bezeichnet. Abtastlänge L und die Bereichslängen d1-di sind derart abgestimmt aufeinander gewählt, dass in einer jeden Relativlage vom ersten Zeilensensor 4 zum ersten 2D-Muster 5 wenigstens eine, im Beispiel wenigstens drei, Bereichsgrenzen 15a-15i innerhalb der Abtastlänge L liegen. Eine derartige Ausbildung des ersten 2D-Musters ermöglicht, dass erste Codewörter relativ einfach mit Hilfe der dadurch entstehenden Bereiche a1-ai gebildet werden können und zwar indem für jede Position entlang der Messstrecke M erste Codewörter aus jeweils eineindeutigen Abfolgen von Bereichstypen gebildet werden.

Die Bereichslängen d1-di, definiert als Abstand zweier Bereichsgrenzen 15a-15i zueinander in Vorschubrichtung F, sind, wie in Fig. 2b dargestellt, optional unterschiedlich, auch für gleiche Bereichstypen. Die unterschiedlichen Bereichslängen d1-di werden dann zum Bilden von ersten Codewörtern herangezogen, indem die ersten Codewörter aus einer eindeutigen Kombination von Bereichslängen d1-di und Abfolge von Bereichstypen gebildet werden, wie anhand des Beispiels im Folgenden veranschaulicht wird: Im gezeigten Beispiel ist das erste 2D-Muster 5 aus drei Bereichstypen aufgebaut mit vier unterschiedlichen Bereichslängen d1-d4. Dabei sind die Anzahl der unterschiedlichen Bereichslängen d1-di (hier: vier) und die Anzahl der Bereichstypen (hier: drei) aufeinander abgestimmt, vorzugsweise zueinander teilerfremd (engl: relatively prime bzw. coprime), gewählt, um eine möglichst grosse Anzahl an eineindeutigen Kombinationen und damit eineindeutigen ersten Codewörtern zu erhalten. Es ergeben sich $3^3$=27 verschiedene Kombinationen von drei aufeinander folgenden Bereichstypen. Weiter kommen $4^2$=16 unterschiedliche Kombinationen von zwei aufeinander folgenden Bereichslängen d1-di vor. Damit sind insgesamt aus allen möglichen unterschiedlichen Anordnungskombinationen der Bereiche a1-ai in Vorschubrichtung F $3^3.4^2$ = 432 unterschiedliche Codewörter bildbar. In der Decodiertabelle der Steuer- und Auswerteeinheit 2 sind die Abfolgen der Bereichstypen und Bereichslängen d1-di bzw. deren unterschiedliche Kombinationen hinterlegt, so dass den mit einem jeweiligen ersten Codewort korrespondierenden Abtastsignalen jeweils eine Position P zuordenbar ist. Mit 432 unterschiedlichen ersten Codewörtern sind bei entsprechend abgestimmter Abtastlänge L 432 unterschiedliche Positionen absolut codierbar. Damit sind bei einer (mittleren) Bereichslänge d1-d4 von z.B. 2mm Relativlagen von ersten Zeilensensor 4 zu erstem 2D-Muster 5 entlang einer Messstrecke von 86,4cm in Vorschubrichtung F absolut bestimmbar. Die maximale Zahl der bildbaren Codewörter ist durch die Wahl der Abtastlänge L bzw. umgekehrt der (mittleren) Bereichslänge di, die Anzahl der Bereichstypen und die Anzahl der Bereichslängen di einstellbar. Längere Messstrecken lassen sich z.B. durch ein erstes 2D-Muster 5 mit mehr als drei Bereichstypen ai und/oder mehr als vier Bereichslängen d1-d4 und entsprechend angepasster Abtastlänge L realisieren.

Die so durch die Musterelemente 6 gebildeten ersten Codewörter sind zum einen deshalb vergleichsweise robust abtastbar bzw. fehlerfrei durch die Gesamtheit der Detektoren in die korrespondierenden Abtastsignale wandelbar, weil die Ermittlung der Bereichstypen anhand der Eigenschaften der sie bildenden Musterelemente wie z.B. der Musterelementperiodizitäten und/oder Musterelementneigungen redundant anhand mehrerer Musterelemente (bzw. Abschnitte der durch diese Musterelemente gebildeten digitalen Folge) erfolgen kann. Zum anderen sind die Bereichslängen d1-di mit derart grossen Unterschieden zueinander wählbar, dass die Toleranzen bei der Ermittlung der Bereichslängen d1-di anhand des Abtastsignals gross sind. Dies wird erreicht, indem in der Decodiertabelle der Steuer- und Auswerteeinheit jeweils mehrere sich leicht unterscheidende Folgen digitaler Werte bzw. Abschnitte von diesen Folgen einer Bereichslänge di eindeutig zugeordnet sind (bzw. in Kombination mit einer Bereichsabfolge eindeutig einer absoluten Position zugeordnet sind). D.h. wenigstens zwei sehr ähnliche Bitpattern, welche sich z.B. in zwei oder drei aufeinander folgenden Bits unterscheiden, ergeben decodiert ein und dieselbe Bereichslänge di. Unterscheiden sich z.B. zwei Bitpattern nur in einer Stelle, so dass bei dem einen Bitpattern beispielsweise eine Null anstelle einer Eins auftritt, wird beiden Bitpattern die gleiche Bereichslänge di zugeordnet. Somit ist die Bereichslänge di auch bei Ableseungenauigkeiten bzw. kleineren Ablesefehlern ermittelbar, wodurch eine relativ robust decodierbare Absolutcodierung erzielt wird.

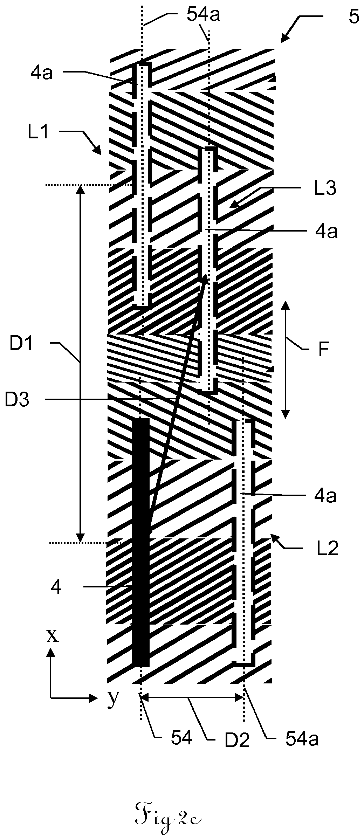

Fig. 2c zeigt schematisch Fortbildungen eines erfindungsgemässen Systems, bei dem der erste Abtastkopf 51 zusätzlich zum ersten Zeilensensor 4 einen zweiten Zeilensensor 4a (gestrichelt in 3 verschiedenen Lagen L1, L2 und L3 relativ zum ersten Zeilensensor 4 dargestellt) aufweist, der ebenfalls etwa in Vorschubrichtung F in der zur Muster-rebene x-y parallelen Ebene ausgerichtet ist, so dass die Längsachsen 54 bzw. 54a beider Zeilensensoren 4 und 4a etwa parallel zueinander angeordnet sind. Die beiden Zeilensensoren 4 und 4a sind in Bezug auf die Vorschubrichtung F im Abtastkopf entweder in Vorschubrichtung hintereinander montiert (L1), so dass die beiden Zeilensensoren 4 und 4a in Vorschubrichtung F einen fixen Zeilensensorabstand D1 als Abstand der beiden Zeilensensormitten 14 und 14' zueinander aufweisen, der bekannt und in der Steuer- und Auswerteeinheit hinterlegt ist. Alternativ weisen die beiden Zeilensensoren 4 und 4a einen fixen Zeilensensorabstand D2 in y-Richtung auf, sind also in Vorschubrichtung F nebeneinander angeordnet (L2) oder sie sind parallel-versetzt zueinander angeordnet (L3) mit einem fixen Zeilensensorabstand D3. Der zweite Zeilensensor 4a entspricht in seiner Funktionsweise dem ersten Zeilensensor 4 und kann baugleich zu diesem ausgebildet sein, ist also wie dieser zur Abtastung des ersten 2D-Musters 5 ausgebildet und zur Erzeugung eines Abtastsignals, welches mit dem durch die vom zweiten Zeilensensor 4a jeweils abgetasteten Musterelement 6 gebildeten ersten Codewort korrespondiert, wobei anhand des Abtastsignals die vom abgetasteten ersten Codewort codierte Position und eine Abweichung des zweiten Zeilensensors 4a von seiner Ideallage zum ersten 2D-Muster 5 bestimmbar ist.

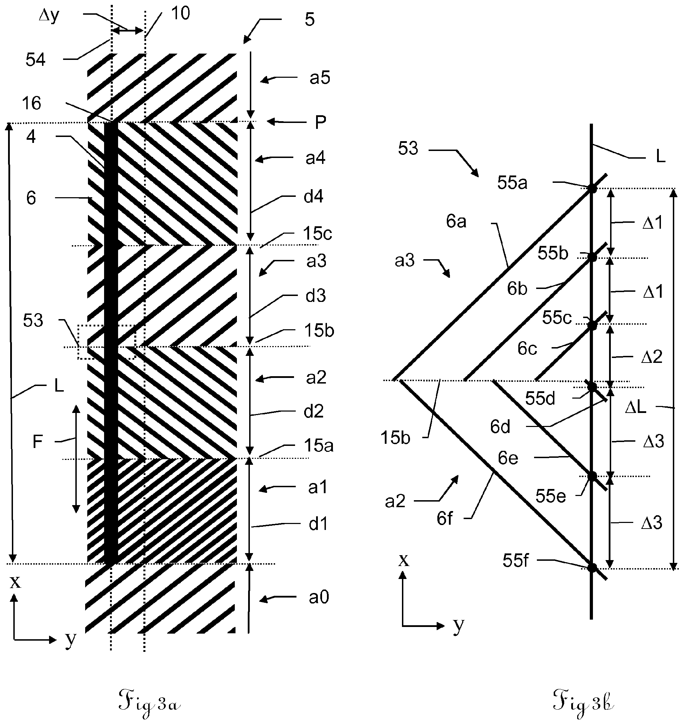

Fig. 3a zeigt die gleiche Ausführungsform eines erfindungsgemässen Systems wie die Fig. 2b. Im Beispiel nach Fig. 3a weicht allerdings die Lage vom ersten Zeilensensor 4 und dem ersten 2D-Muster 5 um den seitlichen Versatz $\Delta y$ von der Ideallage (Linie 10) bezogen auf den Bewegungsfreiheitsgrad in y-Richtung ab, so dass die Längsachse 54 des ersten Zeilensensors 4 um $\Delta y$ in negative y-Richtung versetzt ist.

Da die Bereichstypen a1-ai und gegebenenfalls die Bereichslängen d1-di unabhängig von der Lage des ersten Zeilensensors 4 in y-Richtung detektierbar sind, erfolgt eine Bestimmung der absoluten Position P auch bei vorliegendem seitlichen Versatz $\Delta y$ wie oben anhand Fig. 2b beschrieben. Die erfindungsgemässe Bestimmung der Abweichung von der Ideallage in Form des seitlichen Versatzes $\Delta y$ wird nachfolgend anhand der Figuren 3a und 3b beschrieben.

Fig. 3b stellt den Ausschnitt 53 des ersten 2D-Musters 5 aus Fig. 3a vergrössert dar. Der Ausschnitt 53 zeigt Teile des Bereichs a2 mit den Musterelementen 6d-6f und des Bereichs a3 mit den Musterelementen 6a-6c und dazwischen die Bereichsgrenze 15b. Die Musterelemente 6a-6f werden auf einem Teilstück $\Delta L$ der Abtastlänge L an den Stellen 55a-55f abgetastet. Aufgrund der Anordnung bzw. Ausrichtung der Musterelemente 6a-6f ist die Lage der Abtaststellen 55a-55f innerhalb der Abtastlänge L vom seitlichen Versatz $\Delta y$ abhängig, d.h. wird der erste Zeilensensor 4 bei gleich bleibender Position P in y-Richtung relativ zum ersten 2D-Muster 5 versetzt, "wandern" die Abtaststellen 55a-55f auf dem Sensorarray 24 entlang der x-Richtung. Somit ist in einer Position P, welche basierend auf dem zugehörigen ersten Codewort bestimmt bzw. bestimmbar ist, z.B. aus der Lage der Abtaststellen 55a-55f, welche die Musterelemente 6a-6f des ersten Codeworts innerhalb der Abtastlänge L erfassen, der seitliche Versatz $\Delta y$ bestimmbar. Hierzu wird das mit dem ersten Codewort korrespondierende Abtastsignal von der Steuer- und Auswerteeinheit 2 anhand von dort hinterlegten Informationen ausgewertet.

Beispielsweise ist für die anhand des ersten Codeworts zu bestimmende Position P in Vorschubrichtung F eine Information über das Abtastsignal in der Ideallage hinterlegt, z.B. über die Verteilung oder die Stärke der einzelnen Signale oder Gruppen von Signalen der Detektoren des ersten Zeilensensors 4. Das tatsächlich erzeugte und mit dem ersten Codewort korrespondierende Abtastsignal in dieser Position P wird mit diesem "idealen" Abtastsignal verglichen, wozu das zugehörige "ideale" Abtastsignal basierend auf dem ersten Codewort nachgeschlagen wird. Durch den Vergleich von tatsächlich erzeugtem Abtastsignal mit dem "idealen" Abtastsignal wird anhand der hinterlegten Information der seitliche Versatz $\Delta y$ bestimmt. Da die Platzierung der einzelnen Detektoren im linearen Array bekannt ist, wird beispielsweise anhand der Signale derjenigen Detektoren, welche jene das erste Codewort bildende Musterelemente 6 auf Abtastlänge L abtasten (also diejenigen Detektoren, welche den Abtaststellen 55a-55f entsprechen), der Versatz $\Delta y$ bestimmt. Z.B. werden die Musterelemente 6a-6f in der Ideallage (Linie 10) von den Detektoren mit der Platzierung a, a+3, a+6, a+8, a+10 und a+12 im linearen Array abgetastet (a: beliebige natürliche Zahl). Werden die Musterelemente 6a-6f in der Position P tatsächlich von den Detektoren a+1, a+4, ..., a+13 abgetastet, wird hieraus anhand der in der Steuer- und Auswerteeinheit 2 hinterlegten Information über den linearen Array der seitliche Versatz $\Delta y$ errechnet oder mittels einer in einem Kalibriervorgang erstellten Tabelle nachgeschlagen. Alternativ bilden die Musterelemente 6 auf der gesamten Länge in y-Richtung des ersten 2D-Musters 5 jeweils auf einer Abtastlänge L ein erstes Codewort, welches nicht nur die Position P, sondern auch den Versatz $\Delta y$ codiert. Mit anderen Worten gibt es jeweils mehrere erste Codewörter, die die gleiche absolute Position P, aber unterschiedlichen Versatz $\Delta y$ codieren.

Die Bestimmung des seitlichen Versatzes $\Delta y$ wird anhand des folgenden Beispiels weiter verdeutlicht: Die Musterelemente 6 des Bereichs a2, darin eingeschlossen die betrachteten Musterelemente 6d-6f, sind dergestalt, dass sie innerhalb eines vorgegebenen Koordinatensystems mathematisch durch folgende, in der Steuer- und Auswerteeinheit 2 hinterlegte, parametrisierte Vorschrift

$$f_i(x) = x + 42 - 13i \qquad \text{(i: ganze Zahl)} \qquad (1)$$

beschreibbar sind (beispielsweise ist der Laufparameter i für das Musterelement 6f i=1, für das Musterelement 6e i=2 und für das Musterelement 6e i=3).

Die Musterelemente 6 des Bereichs a3, darin eingeschlossen die betrachteten Musterelemente 6a-6c, sind beschreibbar durch folgende, ebenfalls hinterlegte, parametrisierte Vorschrift mit dem Laufparameter j

$$g_j(x) = 10j - x \qquad \text{(j: ganze Zahl)} \qquad (2).$$

Aufgrund dieser bekannten, für den Bereich a2 bzw. a3 spezifischen Information kann anhand der wie folgt ermittelten Abstände von erfassten Musterelementen 6a-6f auf den seitlichen Versatz $\Delta y$ geschlossen werden. Die Abstände werden ermittelt, indem die Differenz der Platzierungen der die Musterelemente 6a-6f erfassenden Detektoren gebildet wird, wobei diese Differenz der Differenz der den Schwerpunkten der abgetasteten Musterelemente 6a-6f zugeordneten Digitalwerte entspricht. Angenommen, die Schwerpunkte der abgetasteten Musterelemente 6a-6f werden für die Stellen 55a-55f bei willkürlich gewählten Einheiten als digitalen Werte 28, 18, 8, -1, -14, -27 gemessen bzw. erfasst. Durch Subtraktion benachbarter Werte ergeben sich für die Abstände der Stellen 55a-55f folgende drei verschiedene Differenzwerte $\Delta 1$, $\Delta 2$, $\Delta 3$: 28-18=18-8=10=$\Delta 1$, 8-(-1)=9=$\Delta 2$, -1-(-14)=-14-(-27)=13=$\Delta 3$

Anhand der in der Steuer- und Auswerteeinheit 2 hinterlegten Information, also der Gleichungen (1), (2) und der ermittelten Abstände $\Delta 1$, $\Delta 2$, $\Delta 3$ werden die Digitalwerte 28, 18, 8 den Musterelementen 6a-6c bzw. dem Bereich a3 zugeordnet. die Werte -1, -14, -27 werden den Musterelementen 6d-6f bzw. dem Bereich a2 zugeordnet. Die Werte -1, -14, -27 werden aufgrund dieser Zuordnungsinformation in die für den Bereich a2 geltende Gleichung (1) eingesetzt, die Werte 28, 18, 8 in die für den Bereich a3 geltende Gleichung (2) eingesetzt, wodurch sich idealerweise für den Bereich a3 für jeden Wert die gleiche Gleichung

$$f_i(x) = 15 - 13i \qquad (3),$$

für den Bereich a2 für jeden Wert die gleiche Gleichung

$$g_j(x) = 10j - 8 \qquad (4)$$

ergibt (falls für die einzelnen Werte desselben Bereichs a3 bzw. a2 aufgrund von Messunsicherheiten das Einsetzen der gemessenen Werte in die Gleichung (1) bzw. (2) leicht unterschiedliche Ergebnisse liefert, wird gemittelt und geeignet quantisiert).

Da der Sensor unabhängig vom betrachteten Bereich, also für beide Bereiche a2 und a3 den gleichen Versatz $\Delta y$ aufweist, beschreiben die beiden Gleichungen (3) und (4) die gleiche y-Positionierung des Zeilensensors 4 relativ zum 2D-Muster 5. Deshalb können sie gleichgesetzt werden:

$$y = f_i(x) = g_j(x) =$$
$$15 - 13i = 10j - 8 \qquad (5).$$

Hieraus lässt sich ein System linearer Kongruenzen erstellen, wobei sich für den zur Vorschrift $f_i(x)$ gehörigen Teil aus (5) ergibt:

$$y \bmod 13 = 15 \bmod 13 = 2 \qquad (6).$$

Für den zur Vorschrift $g_j(x)$ gehörigen Teil aus Gleichung (5) ergibt sich:

$$y \bmod 10 = -8 \bmod 10 = 2 \qquad (7).$$

Das Gleichungssystem (6), (7) mit seinen unendlich vielen Lösungen wird nach bekannter Vorgehensweise mit Hilfe des Chinesischen Restsatzes (engl.: Chinese remainder theorem) aufgelöst, wodurch sich die Gleichung (8) ergibt, welche die gesuchte Abweichung in y-Richtung beschreibt:

$$y = 2 + 130k \qquad (8)$$

(kgV: kleinstes gemeinsames Vielfaches; k: ganze Zahl). Aus dem Ergebnis, der Zahl "130" ergibt sich, dass der seitliche Versatz $\Delta$y innerhalb eines Längenintervalls von 130 (der willkürlich gewählten) Einheiten eindeutig bestimmbar ist. Beträgt eine Einheit beispielsweise 10$\mu$m, sind damit gemäss dem Beispiel Abweichungen von der Ideallage $\Delta$y von $\pm 650\mu m$ eindeutig bestimmbar. Läge tatsächlich ein darüber hinausgehender seitlicher Versatz $\Delta$y des Sensors vor, wäre dieser aufgrund der Vieldeutigkeit der Lösung nicht mehr eindeutig bestimmbar. Jedoch ist für in der Praxis auftretende Abweichungen $\Delta$y eine derartige Auflösung in der Regel ausreichend. Andernfalls wird durch das Heranziehen eines oder mehrerer weiterer Bereiche a1-ai das Bestimmen eines seitlichen Versatzes $\Delta$y innerhalb eines grösseren Längenintervalls ermöglicht.

Das Beispiel ist aus Gründen der Verständlichkeit sehr einfach gehalten. Alternativ zur Darstellung haben die Musterelemente 6 eines Bereichs unterschiedliche Neigung und/oder variierende Abstände zueinander. Als weitere Alternative haben die Musterelemente 6 keinen geraden, sondern einen gewundenen oder gekrümmten und/oder unterbrochenen, unstetigen Verlauf, der durch Berechnung oder Kalibrierung bekannt und tabellarisch oder funktional in der Steuer- und Auswerteeinheit 2 hinterlegt ist.

Fig. 4a stellt in Aufsicht im Vergleich zu Fig. 2b eine Verdrehung des ersten Zeilensensors 4 um die z-Achse dar. Der erste Zeilensensor 4 ist um seine Mitte 14 um den Drehwinkel $\alpha$ aus seiner Ideallage (Linie 10) gedreht. Um die Position P und die Verdrehung bzw. den Drehwinkel $\alpha$ zu bestimmen, ist das Abtastsignal bzw. das erste Codewort, das die Position P codiert, als Funktion des Drehwinkels $\alpha$ in der Steuer- und Auswerteeinheit hinterlegt. Hierzu ist die funktionale Abhängigkeit des Abtastsignals vom Drehwinkel $\alpha$ als Rechenvorschrift oder Tabelle zum Nachschlagen in der Steuer- und Auswerteeinheit hinterlegt. Es werden entweder eine funktionale Abhängigkeit pro Codewort oder pro Gruppe von Codewörtern verwendet oder, bei Vorkommen nur relativ kleiner Abweichungen von der Ideallage vorteilhaft, eine einzige funktionale Abhängigkeit für alle Codewörter. Die Rechenvorschrift bzw. Tabelle wird dabei, gegebenenfalls für jedes Abtastsignal bzw. jedes erste Codewort, aus Kenntnis des gesamten ersten 2D-Musters 5 berechnet oder in einem Kalibrierdurchlauf bestimmt. Anhand des so bestimmten funktionalen Zusammenhangs werden in der Position P aus dem Abtastsignal in der verdrehten Ausrichtung des ersten Zeilensensors 4 die Position P und der Drehwinkel $\alpha$ ermittelt.

Fig. 4b stellt ein Verkippen des ersten Zeilensensors 4 um die x-Achse aus der Ideallage (Linie 9) dar. Dargestellt ist eine Frontalansicht (x-Achse orthogonal zur Zeichenebene). Der erste Zeilensensor 4, dessen Längsachse sich orthogonal zur Zeichenebene erstreckt, ist aus seiner Ideallage (Linie 9) um den x-Kippwinkel $\beta$ verkippt, oder mit anderen Worten um die x-Achse um den x-Kippwinkel $\beta$ verdreht. Die Bestimmung der Position P und der Verkippung bzw. des x-Kippwinkels $\beta$ erfolgen analog zur Vorgehensweise nach Fig. 4a: das Abtastsignal bzw. das erste Codewort, das die Position codiert, ist als Funktion des x-Kippwinkels $\beta$ in der Steuer- und Auswerteeinheit 2 in Form einer Rechenvorschrift oder Tabelle hinterlegt. Die funktionale Abhängigkeit wird ebenfalls wie oben beschrieben pro Abtastsignal oder für mehrere oder alle Abtastsignale ermittelt, und zwar rechnerisch oder mittels eines Kalibrierdurchlaufs. Optional wird dabei beim Erstellen des funktionalen Zusammenhangs zwischen Abtastsignal und x-Kippwinkel $\beta$ die Signalamplitude des jeweiligen Detektorsignals der einzelnen Detektoren berücksichtigt, falls aufgrund des zum Abtasten angewandten physikalischen Wirkprinzips die Stärke bzw. Amplitude des Detektorsignals eines Detektors von seinem Abstand zum ersten 2D-Muster 5 (eindeutig und detektierbar) abhängig ist. Anhand des funktionalen Zusammenhangs werden in der Position P aus dem Abtastsignal in der verkippten Ausrichtung des ersten Zeilensensors 4 die Position und der x-Kippwinkel $\beta$ ermittelt.

Fig. 4c stellt ein Verkippen des ersten Zeilensensors 4 um die y-Achse aus der Ideallage (Linie 12) in Seitenansicht dar, wobei die Längsachse 54 des ersten Zeilensensors 4 in Ideallage (Linie 12) in x-Richtung parallel zur Ebene des ersten 2D-Musters 5 verläuft. Die Bestimmung der Position P und der Verkippung bzw. des y-Kippwinkels $\gamma$ erfolgen analog zur Vorgehensweise nach Fig. 4a und 4b. Optional wird dabei analog zur Vorgehensweise nach Fig. 4b beim Erstellen des funktionalen Zusammenhangs zwischen Abtastsignal und y-Kippwinkel $\gamma$ die Signalamplitude des jeweiligen Detektorsignals der einzelnen Detektoren berücksichtigt. Bei einem optischen Messprinzip wird die von einem Detektor "gesehene" Breite eines jeweiligen als Strich ausgebildeten Musterelements 6 mit der hinterlegten Breite in Ideallage (Linie 12) verglichen, woraus auf den Abstand in z-Richtung des jeweiligen Detektors zum ersten 2D-Muster 5 geschlossen wird. Bei einem kapazitiven Messprinzip wird die Abstandsabhängigkeit der durch die Musterelektroden und Sensorelektroden gebildeten Kapazität herangezogen. Eine solche Vorgehensweise mit Berücksichtigung der Signalamplitude des jeweiligen Detektorsignals der einzelnen Detektoren wird optional zudem verwendet, um zusätzlich oder alternativ als weitere Abweichung von der Ideallage den Versatz in z-Richtung des ersten Zeilensensors 4, d.h. den Abstand des ersten Zeilensensors 4 zum ersten 2D-Muster 5 als Distanz seiner Sensormitte 14 zum ersten 2D-Muster 5, zu bestimmen.

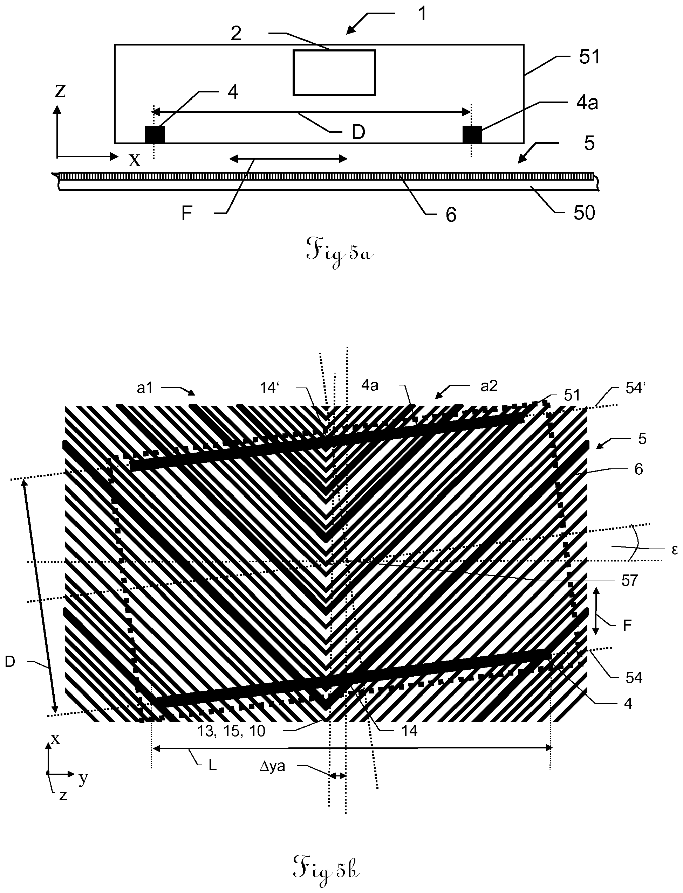

Die Figuren 5a und 5b zeigen eine Fortbildung eines erfindungsgemässen Systems 1, bei welchem der erste Abtastkopf 51 neben einem ersten etwa orthogonal zur Vorschubrichtung F ausgerichteten Zeilensensor 4 einen zweiten ebenfalls etwa orthogonal zur Vorschubrichtung F ausgerichteten Zeilensensor 4a aufweist. Die Fig. 5a zeigt eine schematische Darstellung in Seitenansicht des Systems 1 mit Musterträger 50, welcher das erste 2D-Muster 5 mit Musterelementen 6 aufweist, und mit dem ersten Abtastkopf 51, welcher die Steuer- und Auswerteeinheit 2 und die beiden Zeilensensoren 4 und 4a in Ideallage relativ zum ersten 2D-Muster 5 aufweist. Die beiden Zeilensensoren 4 und 4a sind etwa parallel zueinander ausgerichtet und im ersten Abtastkopf 51 in Vorschubrichtung F hintereinander montiert, weshalb sie einen fixen Zeilensensorabstand D als Abstand der beiden Zeilensensormitten 14 und 14' zueinander aufweisen. Alternativ sind der erste und der zweite Zeilensensor 4 und 4a mit fixem Zeilensensorabstand in Vorschubrichtung F nebeneinander oder parallel-versetzt zueinander angeordnet (analog zur Darstellung nach Fig. 2c).

Der Zeilensensorabstand D ist bekannt und in der Steuer-und Auswerteeinheit 2 hinterlegt. Der zweite Zeilensensor 4a ist wie der erste Zeilensensor 4 ausgebildet zur Abtastung des ersten 2D-Musters 5 und zur Erzeugung eines Abtastsignals, welches mit dem durch die vom zweiten Zeilensensor 4a jeweils abgetasteten Musterelemente 6 gebildeten ersten Codewort korrespondiert. Dabei sind anhand des Abtastsignals die vom abgetasteten ersten Codewort codierte absolute Position und eine Abweichung von der Ideallage des zweiten Zeilensensors 4a bezüglich des ersten 2D-Musters 5 basierend auf dem ersten Codewort bestimmbar. Die zu bestimmende Position als Position des ersten Abtastkopfs 51 wird bei Vorhandensein von zwei in Vorschubrichtung F beabstandet angeordneten Zeilensensoren 4, 4a z.B. als Mittelwert aus den beiden absolut bestimmten Positionen der beiden Zeilensensoren 4 und 4a gebildet oder es wird eine durch einen Zeilensensor 4 oder 4a bestimmte Position durch den Positionswert des anderen Zeilensensors 4a bzw. 4 präzisiert. Somit bietet die Verwendung zweier Zeilensensoren 4 und 4a Vorteile hinsichtlich der Genauigkeit und/oder Robustheit der Positionsbestimmung.

Fig. 5b zeigt in Aufsicht einen Teilbereich des erfindungsgemässen Systems 1 nach Fig. 5a. Dargestellt sind das erste 2D-Muster 5, welches vom ersten Zeilensensor 4 und vom zweiten Zeilensensor 4a, die im angedeuteten ersten Abtastkopf 51 integriert sind, abgetastet wird. Der erste und der zweite Zeilensensor 4 und 4a weisen die gleiche Abtastlänge L auf. Alternativ sind die Abtastlängen unterschiedlich gross. Das erste 2D-Muster 5 weist Musterelemente 6 auf, die als gerade Linien unterschiedlicher Breite und komplementärer physikalischer Eigenschaft (im optischen Fall opak/transparent, reflektierend/nicht-reflektierend) ausgestaltet sind. Sie bilden erste Codewörter durch eine festgelegte regelmässig variierende oder pseudozufällige, definiert unterschiedliche Abfolge und definiert unterscheidbarer Ausgestaltung (im Beispiel die unterschiedliche Breite). Alternativ sind die Musterelemente 6 nicht wie dargestellt als gerade, sondern als gekrümmte Linien ausgestaltet, wobei optional Breite und/oder physikalische Eigenschaft eines Musterelements 6 kontinuierlich variieren.

Im Unterschied zur Fig. 5a befinden sich der erste Abtastkopf 51 und damit die beiden Zeilensensoren 4 und 4a nicht in Ideallage (Linie 10) relativ zum ersten 2D-Muster 5, sondern der erste Abtastkopf 51 ist um den Betrag Δya in positive y-Richtung versetzt und um die z-Achse um den Drehwinkel ε verdreht. Für die Bestimmung von Abweichungen von der Ideallage (Linie 10) des ersten und zweiten Zeilensensors 4 bzw. 4a zum ersten 2D-Muster 5 sind die Musterelemente 6 derart geneigt ausgerichtet und in zwei Gruppen von Musterelementen 6 unterschiedlicher Neigung separiert, dass ein v-förmiges erstes 2D-Muster 5 gebildet wird mit einer Symmetrieachse 13 als Bereichsgrenze 15 zwischen einem ersten Bereich a1 (links dargestellt) mit Musterelementen 6 der ersten Neigung und einem zweiten Bereich a2 (rechts dargestellt) mit Musterelementen 6 der zweiten Neigung. Bevorzugt wird ein jeweiliges erstes Codewort anhand von Musterelementen 6 aus beiden Bereichen a1 und a2 gebildet, d.h. dass zum Erzeugen eines mit einem ersten Codewort korrespondierenden Abtastsignals jeweils Musterelemente 6 des ersten (linken) Bereichs a1 und Musterelemente 6 des zweiten (rechten) Bereichs a2 von einem jeweiligen Zeilensensor 4 bzw. 4a abgetastet wird. Um die Bestimmung der Position P trotz eines dargestellten seitlichen Versatzes Δya des ersten Abtastkopfs 51 zu ermöglichen, bilden Musterelemente 6 symmetrisch um die Symmetrieachse 13 des ersten 2D-Musters 5 ein erstes Codewort auf einer y-Länge, die kleiner ist als die Abtastlänge L der Zeilensensoren 4 bzw. 4a, so dass auch bei einem Abtasten in einem seitlichen Versatz Δya immer ein mit dem ersten Codewort korrespondierendes Abtastsignal erzeugt wird. Dabei ist die y-Länge des ersten Codeworts abgestimmt auf einen maximal möglichen seitlichen Versatz $\Delta ya_{max}$. Alternativ bilden die Musterelemente 6 auf der gesamten Erstreckung des ersten 2D-Musters 5 in y-Richtung jeweils auf einer Abtastlänge L ein erstes Codewort, welches jedes für sich die zu bestimmende Position P codiert. Dabei handelt es sich jeweils um das gleiche erste Codewort oder um verschiedene erste Codewörter, deren korrespondierende Abtastsignale alle der gleichen Position P zugeordnet sind. Zur Positions- und Abweichungsbestimmung bei Vorliegen einer Verdrehung bzw. Verkippung ist das Abtastsignal bzw. das erste Codewort, das die Position P codiert, als Funktion des Drehwinkels (hier: ε) in der Steuer-und Auswerteeinheit als Rechenvorschrift oder Tabelle zum Nachschlagen hinterlegt (siehe Beschreibung zu Fig. 3a).

Die Abweichung(en) des ersten Abtastkopfs 51 wird bzw. werden anhand der jeweiligen Abweichung(en) von der Ideallage des ersten Zeilensensors 4 und des zweiten Zeilensensors 4a und des bekannten Zeilensensorabstands D bestimmt. Im Beispiel weicht wie erwähnt der erste Abtastkopf 51 von einer Ideallage (Linie 10) dahingehend ab, dass er sowohl um die Abtastkopfmitte 57 bezüglich der z-Achse um den Winkel ε verdreht ist als auch die Abtastkopfmitte 57 seitlich (in y-Richtung) um einen Betrag Δya versetzt ist. Die Verdrehung bzw. der Drehwinkel ε und der seitliche Versatz Δya werden anhand des jeweiligen seitlichen Versatzes des ersten und zweiten Zeilensensors 4 und 4a in Kenntnis des Zeilensensorabstands D ermittelt. Alternativ oder zusätzlich wird der Drehwinkel ε anhand der Verdrehung des ersten und/oder zweiten Zeilensensors 4 bzw. 4a um die z-Achse bestimmt. Entsprechend werden eine Verdrehung um die x-Achse oder eine Verkippung d.h. Verdrehung um die y-Achse des ersten Abtastkopfs 51 anhand der Verkippungen bzw. Verdrehungen um die x-Achse der beiden Zeilensensoren 4 und 4a ermittelt. Die Abweichungen von einer Ideallage des ersten bzw. zweiten Zeilensensors 4 bzw. 4a relativ zum ersten 2D-Muster erfolgt dabei analog den Beschreibungen zu den Figuren 3a-4c.

Durch die Verwendung zweier beabstandeter Zeilensensoren 4 und 4a sind Abweichungen des ersten Abtastkopfs 51 von einer wohldefinierten Lage und Ausrichtung relativ zum ersten 2D-Muster 5 noch genauer als mit nur einem ersten Zeilensensor 4 bestimmbar, wobei für hochgenaue Anwendungen Abweichungen des ersten Abtastkopfs 51 von einer Ideallage durch die Verwendung zweier Zeilensensoren 4 bzw. 4a hinsichtlich aller Bewegungsfreiheitsgrade bestimmt werden. Die ebenfalls zu bestimmende absolute Position des ersten Abtastkopfs 51, z.B. als Lage der Abtastkopfmitte 57 relativ zum ersten 2D-Muster, wird z.B. als Mittelwert aus den beiden absolut bestimmten Positionen der beiden Zeilensensoren 4 und 4a gebildet, was Vorteile hinsichtlich der Genauigkeit der Bestimmung der Position des ersten Abtastkopfs 51 bietet. Die Verwendung zweier Zeilensensoren 4 und 4a ist zudem vorteilhaft hinsichtlich der Robustheit der Positionsbestimmung.

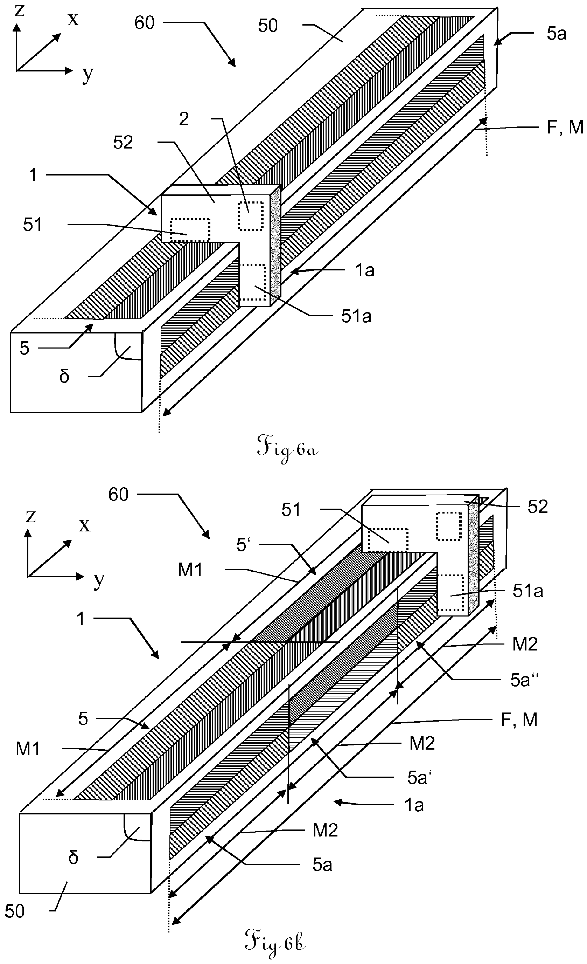

Erfindungsgemässe Systeme 1 eignen sich besonders für Messvorrichtungen 60 wie z.B. absolute Linearencoder oder lineare Weggeber, bei denen die Lage von entlang einer Messstrecke relativ zueinander bewegbarer Glieder zu bestimmen ist. Fig. 6a zeigt eine schematische Darstellung in perspektivischer Ansicht einer Fortbildung einer solchen Messvorrichtung 60. Die Messvorrichtung 60 weist ein erstes erfindungsgemässes System 1 mit einem ersten Abtastkopf 51 und einem ersten 2D-Muster 5 und ein zweites erfindungsgemässes System 1a mit einem zweiten Abtastkopf 51a und einem zweiten 2D-Muster 5a auf. Das erste 2D-Muster 5 und das zweite 2D-Muster 5a sind auf einem gemeinsamen dreidimensionalen Musterträger 50 aufgebracht. Die beiden Abtastköpfe 51 und 51a weisen jeweils wenigstens einen Zeilensensor zum Abtasten des jeweiligen 2D-Musters auf. Im Beispiel sind die beiden Abtastköpfe 51 und 51a und die Steuer- und Auswerteeinheit 2 als gemeinsame Steuer- und Auswerteeinheit für beide Systeme 1 und 1a in einem Objekt 52 integriert dessen Position P in Vorschubrichtung F entlang der Messstrecke M zu bestimmen ist, wobei die beiden Abtastköpfe 51 und 51a eine fixe und bekannte räumliche Anordnung im Objekt und damit zueinander aufweisen.

Die erfindungsgemässen Eigenschaften des zweiten 2D-Musters 5a und des zweiten Abtastkopfs 51a entsprechen denen des ersten 2D-Musters 5 und ersten Abtastkopfs 51, so dass anhand der 2D-Muster 5 bzw. 5a jeweils eine Position P absolut bestimmbar ist und eine Abweichung von einer Ideallage von dem oder den Zeilensensoren und damit vom jeweiligen Abtastkopf 51 bzw. 51a bzw. vom Objekt 52 relativ zum jeweiligen 2D-Muster 5 bzw. 5a bestimmbar sind. Der 3D-Musterträger 50 weist wenigstens drei Seiten auf, deren Kanten zueinander parallel sind, so dass der 3D-Musterträger einem geraden Prisma mit dreieckigem oder sonst polygonem Querschnitt entspricht (in der Fig. 6a einem Quader), wobei sich wie im Beispiel gezeigt an wenigstens zwei Seiten des 3D-Musterträgers 50 ein 2D-Muster befindet. Dadurch liegen das erste und das zweite 2D-Muster 5 bzw. 5a in zwei verschiedenen, nicht-parallelen Ebenen und erstrecken sich in Vorschubrichtung parallel zueinander, so dass das zweite 2D-Muster 5a in einem in der zy-Ebene liegenden Winkel δ zum ersten 2D-Muster 5 angeordnet ist. Im Beispiel ist die Anordnung der ersten 2D-Muster 5 und 5a so gewählt, dass das erste 2D-Muster 5 in einer xy-Ebene liegt und das zweite 2D-Muster 5a in einer zx-Ebene. Somit schneiden sich die beiden Musterebenen in einem Winkel δ von 90°. Es hat sich herausgestellt, dass gute Ergebnisse mit einem Winkel im Bereich von ca. 20° < δ < 120° erzielbar sind.

Aufgrund der erfindungsgemässen Eigenschaften des ersten und des zweiten 2D-Musters 5 und 5a und deren unterschiedlichen Ausrichtung im Raum sowie der fixen und bekannten räumlichen Anordnung von Zeilensensoren bzw. Abtastköpfen 51 und 51a relativ zum Objekt 52 sind die Position des Objekts 52 und eine Abweichung von einer Ideallage des Objekts 52 relativ zum Musterträger 50 bezüglich aller Bewegungsfreiheitsgrade bestimmbar. Z.B. werden anhand des ersten 2D-Musters 5 ein seitlicher Versatz in y-Richtung bestimmt und anhand des zweiten 2D-Musters 5a ein seitlicher Versatz in z-Richtung, so dass insgesamt ein Versatz des Objekts 52 in der yz-Ebene, also quer zur Vorschubrichtung F, bestimmt ist. Entsprechend werden Verdrehungen und Verkippungen des Objekts 52 anhand der Verdrehungen bzw. Verkippungen des ersten Abtastkopfs 51 und des zweiten Abtastkopfs 51a bestimmt.

Da zur Bestimmung der Abweichung von einer Ideallage des Objekts 52 ohnehin zwei 2D-Muster 5 und 5a vorhanden sind, erfolgt die Bestimmung einer absoluten Position P in Vorschubrichtung F sowohl mit dem ersten System 1 als auch mit dem zweiten System 2 bzw. sowohl anhand des ersten 2D-Musters 5 als auch anhand des zweiten 2D-Musters 5a, was Vorteile hinsichtlich der Robustheit und/oder Genauigkeit der Positionsbestimmung bietet. Eine weitere Steigerung der Robustheit und/oder Genauigkeit wird optional durch Verwendung eines weiteren erfindungsgemässen Systems erreicht mit einem 2D-Muster an einer weiteren Seite des Musterträgers 50, das sich parallel zu den beiden ersten in Vorschubrichtung F erstreckt.

Fig. 6b zeigt eine alternative vorteilhafte Nutzung einer erfindungsgemässen Messvorrichtung 60, welches zwei erfindungsgemässe Systeme 1 und 1a aufweist, hinsichtlich einer Positionsbestimmung entlang einer Messstrecke M. Dargestellt ist schematisch in perspektivischer Ansicht ein 3D-Musterträger 50 mit zwei senkrecht aufeinander stehenden Seitenflächen, die sich in Vorschubrichtung F erstrecken, wobei die eine Seitenfläche bemusterte Messstrecken M1 mit zwei erfindungsgemässen ersten 2D-Mustern 5, 5' aufweist und die andere Seitenfläche bemusterte Messstrecken M2 mit drei erfindungsgemässen zweiten 2D-Mustern 5a, 5a' und 5a" aufweist. Die 2D-Muster 5-5a" sind jeweils kürzer als die gesamte Messstrecke M, auf der die Relativlage des Objekts 52, im Folgenden als Messstreckenposition PM bezeichnet, zu bestimmen ist. Die ersten 2D-Muster 5 und 5' sind in Vorschubrichtung F hintereinander angeordnet und zueinander identisch. Sie weisen in Vorschubrichtung F eine Musterlänge M1 auf, die derart bemessen ist, dass durch die Anordnung der beiden ersten 2D-Muster 5 und 5' in Vorschubrichtung F die gesamte Messstrecke M abgedeckt ist. Ebenso befinden sich drei zweite, zueinander identische 2D-Muster 5a-5a" in Vorschubrichtung F hintereinander und decken jeweils eine Länge M2 der Messstrecke M ab. Die ersten und zweiten 2D-Muster 5, 5' und 5a-5a" erstrecken sich in Vorschubrichtung F parallel zueinander, so dass entlang der Messstrecke M jeweils ein erstes 2D-Muster 5 oder 5' vom ersten Abtastkopf 51 des ersten Systems 1 und gleichzeitig ein zweites 2D-Muster 5a, 5a' oder 5a" vom zweiten Abtastkopf 51a des zweiten Systems 1a abgetastet wird. Jedes erste 2D-Muster 5, 5' bildet erfindungsgemäss jeweils erste Codewörter, jedes zweite 2D-Muster jeweils zweite Codewörter, welche Positionen auf der Länge M1 bzw. M2 des jeweiligen Musters 5, 5' bzw. 5a-5a" absolut und eindeutig codieren. Da die ersten 2D-Muster 5 und 5' und die zweiten 2D-Muster 5a-5a" jeweils untereinander identisch sind, kommen die jeweiligen ersten bzw. zweiten Codewörter auf der gesamten Messstrecke M zweimal (erstes 2D-Muster) bzw. dreimal (zweites 2D-Muster) vor. Die Musterlängen M1 und M2 sind nun derart unterschiedlich und aufeinander abgestimmt gewählt, dass entlang der gesamten Messstrecke M bei Abtastung eines ersten Musters 5 oder 5' und eines zweiten Musters 5a-5a" in gleicher Relativlage von Objekt 52 zu Musterträger 50 eine Codewortkombination als Kombination aus einem ersten Codewort des ersten Musters 5 oder 5' und einem zweiten Codewort des zweiten Musters 5a, 5a', 5a" nur einmal vorkommt. Dadurch ist diese Codewortkombination eineindeutig und dient so zur absoluten Bestimmung der Messstreckenposition PM des Objekts 52. Die absolute Bestimmung der Messstreckenposition PM erfolgt anhand der Codewortkombination aus erstem und zweitem Codewort mittels in der Steuer- und Auswerteeinheit 2 hinterlegten Informationen wie z.B. eine Zuordnungstabelle aus Messstreckenpositionen PM und Codewortkombinationen bzw. aus Messstreckenpositionen PM und Kombinationen der jeweils mit den ersten und zweiten Codewörtern korrespondierenden Abtastsignale oder einer Zuordnungstabelle aus Messstreckenpositionen PM und den Kombinationen der Positionen, die jeweils dem ersten Codewort und dem zweiten Codewort zugeordnet sind.

Fig. 6b zeigt der besseren Übersicht wegen stark unterschiedlich lange erste und zweite 2D-Muster. Vorzugsweise ist jedoch, abweichend von der Darstellung in Fig. 6b, der Unterschied zwischen der Musterlänge M1 des ersten 2D-Musters 5 bzw. der Unterschied der Anzahl der ersten Codewörter möglichst gering und der Musterlänge M2 bzw. der Anzahl der zweiten Codewörter des zweiten 2D-Musters 5a minimal und die Musterlängen M1, M2 bzw. die Codewörteranzahlen zueinander teilerfremd, wodurch sich vorteilhaft eine möglichst grosse Anzahl an codierbaren Messstreckenpositionen PM ergibt. Beispielsweise weist das erste 2D-Muster 5 auf der Musterlänge M1 1024 erste Codewörter auf und das zweite 2D-Muster 5a auf der Musterlänge M2 1023 zweite Codewörter. Es sind somit 1024·1023 = 1047552 Kombinationen eines ersten Codeworts des ersten Musters 5 mit einem zweiten Codewort des zweiten Musters 5a möglich. Die Messstrecke M ist dadurch in 1047552 bestimmbare Positionen aufteilbar. Entspricht jede der codierten, diskreten Positionen einem Messstreckenstück von z.B. 100$\mu m$, ergibt sich somit eine Messstrecke M von 104,7552m bei Musterlängen M1 und M2 von 10,24cm bzw. 10,23cm.

Die absolute Bestimmung der Messstreckenposition PM, also der Relativlage des Objekts 52 auf der Messstrecke M, erfolgt aus den absoluten Positionen P in Bezug auf die Musterlängen M1 bzw. M2 optional durch Erstellen und Lösen eines Systems linearer Kongruenzen, vorzugsweise unter Verwendung des Chinesischen Restsatzes. Wird in einer Relativlage von Objekt 52 vom ersten, 1024 Codewörter aufweisenden 2D-Muster 5 beispielsweise das 500.te erste Codewort abgetastet, vom zweiten, 1023 Codewörter aufweisenden 2D-Muster das 600. zweite Codewort, ergibt sich ein System linearer Kongruenzen aus den beiden Gleichungen (9) und (10) für die gesuchte Messstreckenposition PM:

$$PM \bmod 1024 = 500 \qquad\qquad (9)$$

und

$$PM \bmod 1023 = 600 \qquad\qquad (10).$$

Die Messstreckenposition PM berechnet sich ausgehend von den Gleichungen (9) und (10) zu

$$PM = 600 \cdot 1024 + 500 \cdot (1047552 - 1023) \bmod 1047552 = 102900 \qquad (11).$$

Eine derartige Messvorrichtung 60 ist vor allem vorteilhaft bei langen Messstrecken M, d.h. bei einer langhubigen Messvorrichtung 60, da für 2D-Muster, welche Positionen auf einer Länge M1 bzw. M2 absolut codieren, weniger komplexe Codewörter notwendig sind als bei einer einzigen Absolutcodierung, die eineindeutige erste bzw. zweite Codewörter für die die gesamte Messstrecke M bereitstellen muss. Zudem bieten kleinere Musterlängen M1, M2 Vorteile hinsichtlich der Anfertigung, des Transports und/oder der Montage des Musters. Z.B. werden statt auf einem gemeinsamen, langen Musterträger 50, wie er in Fig. 6b dargestellt ist, die ersten 2D-Muster 5, 5' auf separaten, kurzen Musterträgern aufgebracht, welche auf einer Seite der Messvorrichtung 60 in Vorschubrichtung hintereinander montiert werden und ebenso die zweiten 2D-Muster 5a-5a" auf weiteren separaten, kurzen Musterträgern aufgebracht, welche neben den Musterträgern der ersten 2D-Muster 5, 5', optional auf einer anderen Seite der Messvorrichtung 60, in Vorschubrichtung auf der Messvorrichtung hintereinander montiert werden. Die ersten 2D-Muster 5, 5' erstrecken sich dabei wie bei der Anbringung auf einem gemeinsamen 3D-Musterträger 50 parallel zu den zweiten 2D-Mustern 5a-5a". Um vorteilhaft auch Fertigungstoleranzen, hiervon besonders Ungenauigkeiten bei der Montage solcher einzelnen Musterträger tolerieren zu können, unterscheiden sich das erste 2D-Muster 5 und das zweite 2D-Muster 5a etwas mehr als nur um ein Codewort. Werden beispielsweise jeweils zehn Musterträger mit ersten 2D-Mustern 5 und parallel zu diesen Musterträgern entsprechend zehn Musterträger mit zweiten 2D-Mustern 5a in Vorschubrichtung F hintereinander mit jeweils einer Genauigkeit von $100\,\mu m$ montiert, entsteht insgesamt in Vorschubrichtung F eine Ungenauigkeit von 1mm. Um dies bei einer Teilung der 2D-Muster 5 bzw. 5a in codierte Positionen zu je $100\,\mu m$ ausgleichen zu können, weist das zweite 2D-Muster 5a bei einem ersten 2D-Muster 5 mit 1024 Codewörtern 1024-11=1013 Codewörter anstelle von 1023 Codewörter auf. Um die Ungenauigkeit von bis zu zehn Positionen tolerieren zu können, beträgt die maximale Anzahl von Codewortkombinationen, denen jeweils unter Berücksichtigung der Ungenauigkeit eine Messstreckenposition PM eindeutig zuordenbar ist:

$$1024 \cdot \left\lfloor \frac{1013}{11} \right\rfloor = 94208 \qquad (12).$$

Dies entspricht gemäss obigen Annahmen einer maximalen Messstrecke von 9,4208m, auf der das Objekt 52 eindeutig absolut lokalisierbar ist. Dies ist deutlich weniger als die toleranzfrei maximal mögliche Messstrecke von 1024·1013=1037312 Einheiten bzw. 103,7312m. Deswegen werden zur Vergrösserung der maximalen Messstrecke M bei Tolerierung von Ungenauigkeiten optional weitere 2D-Muster mit einer weiteren, zu den Musterlängen M1 und M2 unterschiedlichen, Musterlänge parallel zu den ersten und zweiten 2D-Mustern 5 bzw. 5a entlang der Messstrecke M angebracht. Optional weist ein jeweiliger Abtastkopf 51 bzw. 51a zur Steigerung der Robustheit des Systems 1, 1a bzw. der Messvorrichtung 60 wenigstens noch einen weiteren Zeilensensor auf, also wenigstens zwei bzw. drei Zeilensensoren.

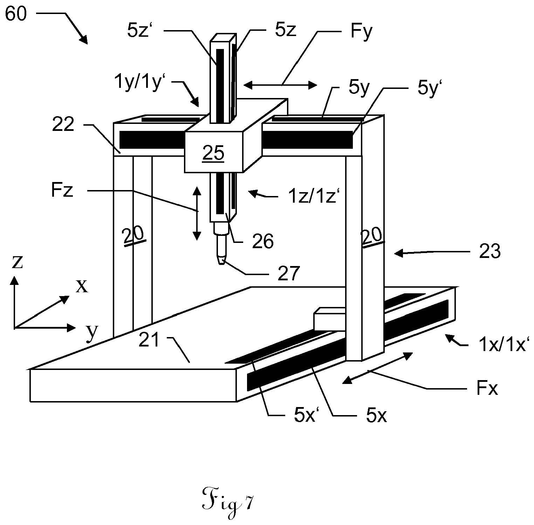

Fig. 7 zeigt eine erfindungsgemässe Messvorrichtung 60, welche ausgebildet ist als Koordinatenmessmaschine (CMM). Die CMM 60 ist ausgebildet zur Bestimmung der Lage einer optischen oder taktilen Abtastspitze 27 im Raum. Sie weist eine plattenartige Basis 21 auf, die eine x-y-Ebene aufspannt und auf der ein Portal 23 mit zwei Portalträgern 20 derart angeordnet ist, dass das Portal in x-Richtung relativ zur Basis 21 bewegbar ist. Das Portal 23 weist weiter eine Brücke 22 und eine Z-Säule 26 auf, wobei die Portalträger 20 miteinander an ihren basisabgewandten Enden über die Brücke 22 verbunden sind. Auf der Brücke 22 ist ein Schlitten 25 angeordnet, der relativ zur Brücke 22 in y-Richtung bewegbar ist. Die Z-Säule 26 ist relativ zum Schlitten 25 in z-Richtung bewegbar, wird in einer Aufnahme des Schlittens 25 geführt und weist an ihrem der Basis 21 zugewandten Ende die Abtastspitze 27 auf. Die Richtung der jeweiligen Relativbewegung von Portal 23, Schlitten 25 bzw. Z-Säule 26 definiert jeweils eine Vorschubrichtung Fx, Fy, Fz entlang derer jeweils durch wenigstens ein, im Beispiel jeweils zwei erfindungsgemässe Systeme 1x und 1x', 1y und 1y', 1z und 1z' eine Position (des Portals gegenüber der Basis, des Schlittens gegenüber der Brücke, der z-Säule gegenüber dem Schlitten) bestimmbar ist. Die Systeme 1x bzw. 1x' sind so in die CMM 60 integriert, dass die Basis 21 das erste 2D-Muster 5x bzw. das zweite 2D-Muster 5x' und das Portal 23 den ersten Abtastkopf bzw. den zweiten Abtastkopf zum Abtasten des 2D-Musters 5x bzw. 5x' aufweist. Analog sind die weiteren Systeme 1y bzw. 1y' und 1z bzw. 1z' derart in die CMM 60 integriert, dass deren Abtastköpfe mit dem Schlitten 25 relativ zu den auf der Brücke 22 bzw. der Z-Säule aufgebrachten 2D-Mustern 5y/5y' bzw. 5z/5z' bewegbar sind. Alternativ zur Verwendung von 2D-Mustern 5x-5z', die jeweils die gesamte mögliche Messstrecke in x,y bzw. z-Richtung abdecken, werden in einer jeden Vorschubrichtung Fx, Fy, Fz hintereinander angeordnete 2D-Muster 5 mit kleinerer Musterlänge verwendet, also Systeme 1x-1z', die analog zu den in Fig. 6b gezeigten ausgebildet sind. Aus den erfindungsgemäss bestimmten Positionen PX, PY und PZ und Abweichungen von den Ideallagen der Abtastköpfe 51x-51z' ist die Raumlage der Abtastspitze 27 absolut und hochpräzise ermittelbar. Die vorliegende Erfindung ermöglicht also durch die absolute Positions- und Abweichungsbestimmung auch ohne hochpräzise Konstruktion bzw. Fertigung der CMM 60 und/oder ohne aufwändige hochpräzise Verfahren zur Kalibrierung der CMM 60 die Raumlage der Abtastspitze 27 hochpräzise zu bestimmen. Andererseits ist durch die erfindungsgemässe absolute Positions- und Abweichungsbestimmung die Raumlage der Abtastspitze 27 bei einem derartigen konstruktiven bzw. kalibrativen Aufwand noch präziser als bei Messvorrichtungen nach dem Stand der Technik bestimmbar.

**Patentansprüche**

1. System (1) zur Bestimmung von Positionen (P, Px, Py, Pz) entlang einer Vorschubrichtung (F, Fx, Fy, Fz) umfassend:

   • einen ersten Sensor (4) mit einem Array von Detektoren und einer Abtastlänge (L) entlang einer Längsachse (54), der dem Abtasten eines ersten Musters (5, 5') und dem Erzeugen eines Abtastsignals dient und in einem ersten Abtastkopf (51) integriert ist,
   • ein vom ersten Sensor (4) abtastbares erstes 2D-Muster (5, 5'), welches sich in Vorschubrichtung (F, Fx, Fy, Fz) erstreckt und aus Musterelementen (6, 6a-6f) besteht, wobei der erste Sensor (4) und das erste 2D-Muster (5, 5') in Vorschubrichtung (F, Fx, Fy, Fz) relativ zueinander beweglich sind, und
   • eine Steuer- und Auswerteeinheit (2) zur Auswertung des Abtastsignals, wobei
   • die Musterelemente (6, 6a-6f) durch definiert unterschiedliche Anordnung und/oder Ausgestaltung zu jeder Position (P, Px, Py, Pz) entlang der Vorschubrichtung (F, Fx, Fy, Fz) ein zugehöriges erstes Codewort bilden, welches jeweils zumindest auf einem Teil der Abtastlänge (L) des ersten Sensors (4) erfassbar ist und welches die jeweilige Position (P) absolut codiert, so dass das erste 2D-Muster (5, 5') in Vorschubrichtung (F, Fx, Fy, Fz) eine absolute Positionscodespur bildet,
   • das Abtastsignal in der jeweiligen Position (P, Px, Py, Pz) jeweils mit dem ersten Codewort korrespondiert,

   **dadurch gekennzeichnet, dass**

   • in der Steuer- und Auswerteeinheit (2) folgende Informationen hinterlegt sind

      o eine Decodierinformation, anhand derer jedem Abtastsignal eindeutig eine absolute Position (P) zuordenbar ist, und
      o Informationen, anhand derer, basierend auf dem ersten Codewort, in der jeweiligen Position (P, Px, Py, Pz) anhand des jeweiligen Abtastsignals eine Abweichung des ersten Sensors (4) von einer Ideallage (9, 10, 12) relativ zum ersten 2D-Muster (5, 5') wenigstens bezüglich eines Bewegungsfreiheitsgrads bestimmbar ist.

2. System (1) nach Anspruch 1,
   **dadurch gekennzeichnet, dass**
   der erste Sensor (4) als Zeilensensor (4) ausgebildet ist.

3. System (1) nach Anspruch 1 oder 2,
   **dadurch gekennzeichnet, dass**
   die Längsachse (54) des ersten Sensors oder Zeilensensors (4) etwa in Vorschubrichtung (F, Fx, Fy, Fz) ausgerichtet ist und die ersten Codewörter des ersten 2D-Musters (5, 5') in Vorschubrichtung (F, Fx, Fy, Fz) Musterelemente (6, 6a-6f) unterschiedlicher Anordnung aufweisen, insbesondere mit unterschiedlicher Neigung zur Vorschubrichtung (F, Fx, Fy, Fz) und unterschiedlichen Musterelementperiodizitäten, und/oder Musterelemente (6, 6a-6f) unterschiedlicher Ausgestaltung.

4. System (1) nach Anspruch 3,
   **dadurch gekennzeichnet, dass**
   das erste 2D-Muster (5, 5') in Vorschubrichtung (F, Fx, Fy, Fz) in eine Vielzahl von jeweils aneinandergrenzenden Bereichen (a1-ai) von Musterelementen (6, 6a-6f) unterschiedlicher Anordnung und/oder Ausgestaltung aufgeteilt ist, wobei

   • die Bereiche (a1-ai) in Vorschubrichtung (F, Fx, Fy, Fz) unterschiedliche Bereichslängen (d1-di) aufweisen,

• jeder Bereich mit Musterelementen einer definierten Ausgestaltung und/oder Anordnung einen Bereichstyp bildet und das erste 2D-Muster (5, 5') wenigstens zwei unterschiedliche Bereichstypen (a1-ai) aufweist, und
• die Abtastlänge (L) des ersten Sensors oder Zeilensensors (4) in Vorschubrichtung (F, Fx, Fy, Fz) so auf die Bereichslängen (d1-di) der Bereiche (a1-ai) abgestimmt ist, dass vom ersten Sensor oder Zeilensensor (4) in einer jeden Position (P, Px, Py, Pz) gleichzeitig Musterelemente (6, 6a-6f) aus wenigstens zwei Bereichen (a1-ai) abtastbar sind, und
• die Abfolge der Bereichstypen der auf einer Abtastlänge (L) abtastbaren Bereiche (a1-ai) zum Bilden eines jeweiligen ersten Codeworts dient.

5. System (1) nach Anspruch 4,
**dadurch gekennzeichnet, dass**

• die Bereiche (a1-ai) in Vorschubrichtung (F, Fx, Fy, Fz) wenigstens zwei unterschiedliche Bereichslängen (d1-di) aufweisen, und
• die Bereichslängen (d1-di), insbesondere in Kombination mit der Abfolge der Bereichstypen, zum Bilden eines jeweiligen ersten Codeworts dienen,
• wobei die Anzahl der unterschiedlichen Bereichslängen (d1-di) und die Anzahl der Bereichstypen, die das erste 2D-Muster (5, 5') aufweist, aufeinander abgestimmt gewählt, insbesondere teilerfremd, sind.

6. System (1) nach einem der Ansprüche 3 bis 5,
**dadurch gekennzeichnet, dass**
im ersten Abtastkopf (51) ein zweiter etwa in Vorschubrichtung (F, Fx, Fy, Fz) ausgerichteter Sensor oder Zeilensensor (4a) zum Abtasten des ersten 2D-Musters (5, 5') integriert ist, wobei der erste Sensor oder Zeilensensor (4) und der zweite Sensor oder Zeilensensor (4a) zueinander angeordnet sind in definierter und in der Steuer- und Auswerteeinheit (2) hinterlegter Position mit einem in Vorschubrichtung (F, Fx, Fy, Fz) definierten Zeilensensorabstand D1-D3, der ebenfalls in der Steuer- und Auswerteeinheit (2) hinterlegt ist, insbesondere wobei die Längsachsen (54, 54a) der beiden Sensoren bzw. Zeilensensoren (4, 4a) etwa parallel zueinander in Vorschubrichtung (F, Fx, Fy, Fz) ausgerichtet sind.

7. System (1) nach Anspruch 1 oder 2,
**dadurch gekennzeichnet, dass**
im ersten Abtastkopf (51) ein zweiter Sensor oder Zeilensensor (4a) zum Abtasten des ersten 2D-Musters (5, 5') integriert ist, wobei

• die Längsachse (54) des ersten Sensors oder Zeilensensors (4) und die Längsachse (54a) des zweiten Zeilensensors (4a) etwa orthogonal zur Vorschubrichtung (F, Fx, Fy, Fz) ausgerichtet sind und
• der erste Sensor oder Zeilensensor (4) und der zweite Sensor oder Zeilensensor (4a) in Vorschubrichtung (F, Fx, Fy, Fz) einen definierten Sensorabstand D aufweisen, der in der Steuer- und Auswerteeinheit (2) hinterlegt ist, insbesondere wobei die Längsachsen (54, 54a) der beiden Sensoren bzw. Zeilensensoren (4, 4a) etwa parallel zueinander ausgerichtet sind,

insbesondere wobei in der Steuer- und Auswerteeinheit (2) Informationen hinterlegt sind, anhand derer basierend auf den mit einem jeweiligen ersten Codewort korrespondierenden Abtastsignalen des ersten Sensors bzw. Zeilensensors (4) und des zweiten Sensors bzw. Zeilensensors (4a) eine Abweichung des ersten Abtastkopfs (51) von einer Ideallage (9, 10, 12) relativ zum ersten 2D-Muster (5, 5') wenigstens bezüglich eines Bewegungsfreiheitsgrads, insbesondere bezüglich aller Bewegungsfreiheitsgrade, bestimmbar ist.

8. Messvorrichtung (60) mit entlang einer Messstrecke (M) relativ zueinander bewegbaren Gliedern,
**dadurch gekennzeichnet, dass**
ein erstes System (1) gemäss einer der vorherigen Ansprüche vorgesehen ist und sich die Messstrecke M in Vorschubrichtung (F, Fx, Fy, Fz) des Systems (1) erstreckt, wobei das System (1) zur Bestimmung der relativen Lage der Glieder zueinander dient, insbesondere wobei die Messvorrichtung (60) als Linearencoder ausgebildet ist.

9. Messvorrichtung (60) nach Anspruch 8,
**dadurch gekennzeichnet, dass**
wenigstens ein zweites System (1a) gemäss einer der Ansprüche 1 bis 7 vorgesehen ist mit einem wenigstens einen Sensor oder Zeilensensor (4, 4a) aufweisenden zweiten Abtastkopf (51a) und einem zweiten 2D-Muster (5a, 5a', 5a"), welches zweite Codewörter aufweist zur Bestimmung einer absoluten Position entlang der Vorschubrichtung (F, Fx, Fy, Fz) und zur Bestimmung einer Abweichung des Sensors bzw. Zeilensensors (4, 4a) von einer Ideallage (9, 10, 12) relativ zum zweiten 2D-Muster (5a, 5a', 5a"), wobei

- das erste 2D-Muster (5, 5') und das zweite 2D-Muster (5a, 5a', 5a") sich in Vorschubrichtung (F, Fx, Fy, Fz) parallel zueinander erstrecken, und insbesondere in unterschiedlichen Ebenen angeordnet sind, wobei im Speziellen die Ebenen einen Winkel von 90°±3° einschliessen, und
- der erste Abtastkopf (51) und der zweite Abtastkopf (51a) gemeinsam bewegbar sind.

**10.** Messvorrichtung (60) nach Anspruch 9,
**dadurch gekennzeichnet, dass**
das erste System (1) mehrere gleiche in Vorschubrichtung (F, Fx, Fy, Fz) hintereinander angebracht erste 2D-Muster (5, 5') und das zweite System (1a) mehrere gleiche in Vorschubrichtung hintereinander angebracht zweite 2D-Muster (5a, 5a', 5a") aufweist, insbesondere wobei die Anzahl der ersten Codewörter des ersten 2D-Musters (5, 5') und die Anzahl der zweiten Codewörter des zweiten 2D-Musters (5a, 5a', 5a") Teilerfremdheit und einen Unterschied in den Anzahlen an Codewörtern zueinander aufweisen, wobei im Speziellen der Unterschied der Anzahlen an Codewörtern abhängig von Fertigungstoleranzen der Messvorrichtung (60) gewählt ist, und/oder jede Codewortkombination als Kombination aus einem ersten Codewort des ersten 2D-Musters (5, 5') und einem zweiten Codewort des zweiten 2D-Musters ((5a, 5a', 5a") entlang der Vorschubrichtung (F, Fx, Fy, Fz) eineindeutig ist, und dass in einer Steuer- und Auswerteeinheit (2) der Messvorrichtung (60) Informationen hinterlegt sind, anhand derer Codewortkombinationen jeweils eindeutig einer Messstreckenposition zuordenbar sind, insbesondere wobei die Anzahl der ersten Codewörter des ersten 2D-Musters (5, 5') und die Anzahl der zweiten Codewörter des zweiten 2D-Musters ((5a, 5a', 5a") dergestalt aufeinander abgestimmt sind, dass Fertigungstoleranzen der Messvorrichtung (60) ausgleichbar sind.

**11.** Messvorrichtung (60) nach einem der Ansprüche 8 bis 10,
**dadurch gekennzeichnet, dass**
die Messvorrichtung (60) eine 3D-Koordinatenmessmaschine (20) ist, wobei die Messeinrichtung (60) zur Bestimmung der Relativlage der Glieder zueinander je wenigstens ein System (1) bezüglich jeder Koordinatenachse aufweist.

**12.** Verfahren zum Bestimmen von Positionen (P, Px, Py, Pz)
entlang einer Vorschubrichtung (F, Fx, Fy, Fz) mit einem System (1) nach Anspruch 1 mit den folgenden Schritten:

- Musterelemente (6, 6a-6f) des ersten 2D-Musters (5, 5') werden auf einer Abtastlänge (L) durch den ersten Sensor (4) abgetastet,
- ein Abtastsignal, welches mit dem durch abgetastete Musterelemente (6, 6a-6f) gebildeten ersten Codewort korrespondiert, wird erzeugt,
- dem Abtastsignal wird anhand von in der Steuer- und Auswerteeinheit (2) hinterlegter Decodierinformation eine absolute Position (P, Px, Py, Pz) zugeordnet, und
- bei Abweichungen des Abtastsignals von dem für diese Position gespeicherten Idealsignal, wird anhand des Abtastsignals und anhand von in der Steuer- und Auswerteeinheit (2) basierend auf dem ersten Codewort für diese Position (P, Px, Py, Pz) hinterlegter Information eine Abweichung des ersten Sensors (4) von einer Ideallage bezüglich wenigstens eines Bewegungsfreiheitsgrads (9, 10, 12) relativ zum ersten 2D-Muster (5, 5') bestimmt.

**13.** Verfahren nach Anspruch 12,
**dadurch gekennzeichnet, dass**
zum Bestimmen der Abweichung von einer Ideallage (7, 8, 9, 10) ein anhand des ersten Codeworts erstelltes mathematisches System linearer Kongruenzen, insbesondere unter Verwendung des Chinesischen Restsatzes (Chinese remainder theorem), gelöst wird.

**14.** Verfahren nach Anspruch 12 oder 13,
**dadurch gekennzeichnet, dass**
es mit einer Messvorrichtung (60) nach Anspruch 11 durchgeführt wird, wobei

- das erste 2D-Muster (5, 5') und das zweite 2D-Muster (5a, 5a', 5a") in einem Schritt abgetastet werden, und
- mittels Codewortkombination aus einem erstem Codewort des ersten 2D-Musters (5, 5') und zweitem Codewort des zweiten 2D-Musters (5a, 5a', 5a") eine absolute Messstreckenposition, insbesondere durch Lösen eines anhand der beiden Codewörter erstellten mathematischen Systems linearer Kongruenzen, im Speziellen unter Verwendung des Chinesischen Restsatzes (Chinese remainder theorem), eindeutig bestimmt wird.

15. Verfahren nach einem der Ansprüche 12 bis 14,
   **dadurch gekennzeichnet, dass**
   es mit einer Messvorrichtung (60) nach Anspruch 10 durchgeführt wird und die zu messende 3D-Koordinate aus den für jede Koordinatenachse bestimmten absoluten Positionen (P, Px, Py, Pz) und Abweichungen von der Ideallage (7, 8, 9, 10) berechnet wird.

16. Computerprogrammprodukt, das auf einem maschinenlesbaren Träger gespeichert ist, oder Computer-Datensignal, verkörpert durch eine elektromagnetische Welle, mit Programmcode, zur Steuerung bzw. Durchführung des Verfahrens nach einem der Ansprüche 12 bis 15.

**Claims**

1. System (1) for determining positions (P, Px, Py, Pz) along a direction of advance (F, Fx, Fy, Fz), comprising:

   • a first sensor (4) with an array of detectors having a scanning length (L) along a longitudinal axis (54), which first sensor is used for scanning a first pattern (5, 5') and producing a scan signal and is integrated in a first scanning head (51),
   • a first 2D pattern (5, 5') that can be scanned by the first sensor (4), extending in the direction of advance (F, Fx, Fy, Fz) and comprising pattern elements (6, 6a-6f), wherein the first sensor (4) and the first 2D pattern (5, 5') are mobile relative to one another in the direction of advance (F, Fx, Fy, Fz), and
   • a control and evaluation unit (2) for evaluating the scan signal, wherein
   • the pattern elements (6, 6a-6f) form an associated first code word for each position (P, Px, Py, Pz) along the direction of advance (F, Fx, Fy, Fz) by virtue of arrangement and/or embodiment that is/are different by definition, which first code word can be sensed in each case at least on a portion of the scanning length (L) of the first sensor (4) and which first code word codes the respective position (P) absolutely, so that the first 2D pattern (5, 5') forms an absolute position code trace in the direction of advance (F, Fx, Fy, Fz), and
   • the scan signal in the respective position (P, Px, Py, Pz) corresponds to the first code word in each case,

   **characterized in that**
   the following information is stored in the control and evaluation unit (2):

   □ a piece of decoding information that can be used to uniquely associate an absolute position (P) with each scan signal, and
   □ information that can be used to determine, on the basis of the first code word, in the respective position (P, Px, Py, Pz), using the respective scan signal, a deviation of the first sensor (4) from an ideal position (9, 10, 12) relative to the first 2D pattern (5, 5') at least in respect of one degree of freedom of movement.

2. System (1) according to Claim 1,
   **characterized in that**
   the first sensor (4) is in the form of a line sensor (4).

3. System (1) according to Claim 1 or 2, **characterized in that**
   the longitudinal axis (54) of the first sensor or line sensor (4) is oriented approximately in the direction of advance (F, Fx, Fy, Fz) and the first code words of the first 2D pattern (5, 5') have, in the direction of advance (F, Fx, Fy, Fz), pattern elements (6, 6a-6f) in a different arrangement, in particular with a different inclination in relation to the direction of advance (F, Fx, Fy, Fz) and different pattern element periodicities, and/or pattern elements (6, 6a-6f) in a different embodiment.

4. System (1) according to Claim 3,
   **characterized in that**
   the first 2D pattern (5, 5') is split, in the direction of advance (F, Fx, Fy, Fz), into a multiplicity of respectively adjoining regions (a1-ai) of pattern elements (6, 6a-6f) in a different arrangement and/or embodiment, wherein

   • the regions (a1-ai) have different region lengths (d1-di) in the direction of advance (F, Fx, Fy, Fz),

• each region having pattern elements in a defined embodiment and/or arrangement forms a region type and the first 2D pattern (5, 5') has at least two different region types (a1-ai), and
• the scanning length (L) of the first sensor or line sensor (4) is attuned to the region lengths (d1-di) of the regions (a1-ai) in the direction of advance (F, Fx, Fy, Fz) such that the first sensor or line sensor (4) can simultaneously scan pattern elements (6, 6a-6f) from at least two regions (a1-ai) in each position (P, Px, Py, Pz), and
• the sequence of the region types of the regions (a1-ai) that can be scanned on a scanning length (L) is used to form a respective first code word.

5. System (1) according to Claim 4,
**characterized in that**

• the regions (a1-ai) have at least two different region lengths (d1-di) in the direction of advance (F, Fx, Fy, Fz), and
• the region lengths (d1-di), particularly in combination with the sequence of the region types, are used to form a respective first code word,
• wherein the number of the different region lengths (d1-di) and the number of the region types that the first 2D pattern (5, 5') has are chosen in a manner attuned to one another, in particular are coprime.

6. System (1) according to any one of Claims 3 to 5, **characterized in that**
the first scanning head (51) has an integrated second sensor or line sensor (4a), oriented approximately in the direction of advance (F, Fx, Fy, Fz), for scanning the first 2D pattern (5, 5'), wherein the first sensor or line sensor (4) and the second sensor or line sensor (4a) are arranged in relation to one another in a defined position, stored in the control and evaluation unit (2), at a line sensor distance D1-D3 that is defined in the direction of advance (F, Fx, Fy, Fz) and that is likewise stored in the control and evaluation unit (2), particularly wherein the longitudinal axes (54, 54a) of the two sensors or line sensors (4, 4a) are oriented approximately parallel to one another in the direction of advance (F, Fx, Fy, Fz).

7. System (1) according to Claim 1 or 2, **characterized in that**
the first scanning head (51) has a second integrated sensor or line sensor (4a) for scanning the first 2D pattern (5, 5'), wherein

• the longitudinal axis (54) of the first sensor or line sensor (4) and the longitudinal axis (54a) of the second line sensor (4a) are oriented approximately orthogonally in relation to the direction of advance (F, Fx, Fy, Fz), and
• the first sensor or line sensor (4) and the second sensor or line sensor (4a) are at, in the direction of advance (F, Fx, Fy, Fz), a defined sensor distance D that is stored in the control and evaluation unit (2), particularly wherein the longitudinal axes (54, 54a) of the two sensors or line sensors (4, 4a) are oriented approximately parallel to one another,

particularly wherein information is stored in the control and evaluation unit (2), which information can be used to determine, on the basis of the scan signals from the first sensor or line sensor (4) and from the second sensor or line sensor (4a) that correspond to a respective first code word, a deviation of the first scanning head (51) from an ideal position (9, 10, 12) relative to the first 2D pattern (5, 5') at least in respect of one degree of freedom of movement, particularly in respect of all degrees of freedom of movement.

8. Measuring apparatus (60) having limbs that are movable relative to one another along a measurement path (M),
**characterized in that**
a first system (1) according to any one of the preceding claims is provided and the measurement path (M) extends in the direction of advance (F, Fx, Fy, Fz) of the system (1), wherein the system (1) is used to determine the relative situation of the limbs in relation to one another, particularly wherein the measuring apparatus (60) is in the form of a linear encoder.

9. Measuring apparatus (60) according to Claim 8, **characterized in that**
at least one second system (1a) according to any one of claims 1 to 7 is provided having a second scanning head (51a), which has at least one sensor or line sensor (4, 4a), and a second 2D pattern (5a, 5a', 5a"), which has second code words for determining an absolute position along the direction of advance (F, Fx, Fy, Fz) and for determining a deviation of the sensor or line sensor (4, 4a) from an ideal position (9, 10, 12) relative to the second 2D pattern (5a, 5a', 5a"), wherein

• the first 2D pattern (5, 5') and the second 2D pattern (5a, 5a', 5a") extend parallel to one another in the direction of advance (F, Fx, Fy, Fz), and particularly are arranged in different planes, wherein specifically the planes enclose an angle of 90°±3°, and
• the first scanning head (51) and the second scanning head (51a) are movable together.

10. Measuring apparatus (60) according to Claim 9, **characterized in that**
the first system (1) has a plurality of like first 2D patterns (5, 5') fitted in succession in the direction of advance (F, Fx, Fy, Fz) and the second system (1a) has a plurality of like second 2D patterns (5a, 5a', 5a") fitted in succession in the direction of advance, particularly wherein the number of the first code words of the first 2D pattern (5, 5') and the number of the second code words of the second 2D pattern (5a, 5a', 5a") have coprimeness and a difference in the numbers of code words in relation to one another, wherein specifically the difference in the numbers of code words is chosen dependent on production tolerances of the measuring apparatus (60),
and/or each code word combination as a combination of a first code word of the first 2D pattern (5, 5') and a second code word of the second 2D pattern (5a, 5a', 5a") is unique along the direction of advance (F, Fx, Fy, Fz), and **in that** information is stored in a control and evaluation unit (2) of the measuring apparatus (60), which information can be used to uniquely associate code word combinations with a measurement path position in each case, particularly wherein the number of the first code words of the first 2D pattern (5, 5') and the number of the second code words of the second 2D pattern (5a, 5a', 5a") are attuned to one another such that production tolerances of the measuring apparatus (60) can be compensated for.

11. Measuring apparatus (60) according to any one of Claims 8 to 10,
**characterized in that**
the measuring apparatus (60) is a 3D coordinate measuring machine (20), wherein the measuring device (60) has at least one respective system (1) for each coordinate axis for the purpose of determining the relative position of the limbs in relation to one another.

12. Method for determining positions (P, Px, Py, Pz) along a direction of advance (F, Fx, Fy, Fz) using a system (1) according to Claim 1, the method having the following steps:

• pattern elements (6, 6a-6f) of the first 2D pattern (5, 5') are scanned by the first sensor (4) on a scanning length (L),
• a scan signal that corresponds to the first code word formed by scanned pattern elements (6, 6a-6f) is produced,
• an absolute position (P, Px, Py, Pz) is associated with the scan signal on the basis of decoding information stored in the control and evaluation unit (2), and
• in the event of deviations of the scan signal from the ideal signal stored for this position, the scan signal and information stored for this position (P, Px, Py, Pz) in the control and evaluation unit (2) on the basis of the first code word are used to determine a deviation of the first sensor (4) from an ideal position in respect of at least one degree of freedom of movement (9, 10, 12) relative to the first 2D pattern (5, 5').

13. Method according to Claim 12,
**characterized in that**
the deviation from an ideal position (7, 8, 9, 10) is determined by solving a mathematical system of linear congruencies that is produced on the basis of the first code word, particularly by using the Chinese remainder theorem.

14. Method according to Claim 12 or 13,
**characterized in that**
it is performed using a measuring apparatus (60) according to Claim 11, wherein

• the first 2D pattern (5, 5') and the second 2D pattern (5a, 5a', 5a") are scanned in one step, and
• code word combination from a first code word of the first 2D pattern (5, 5') and a second code word of the second 2D pattern (5a, 5a', 5a") is used to uniquely determine an absolute measurement path position, particularly by solving a mathematical system of linear congruencies that is produced on the basis of the two code words, specifically by using the Chinese remainder theorem.

15. Method according to any one of Claims 12 to 14, **characterized in that**
it is performed using a measuring apparatus (60) according to Claim 10, and the 3D coordinate to be measured is computed from the absolute positions (P, Px, Py, Pz) and deviations from the ideal position (7, 8, 9, 10) that are determined for each coordinate axis.

**16.** Computer program product that is stored on a machine-readable storage medium, or computer data signal, embodied by an electromagnetic wave, with program code, for controlling or performing the method according to any one of Claims 12 to 15.

## Revendications

**1.** Système (1) de détermination de positions (P, Px, Py, Pz) le long d'une direction d'avance (F, Fx, Fy, Fz), comprenant :

• un premier capteur (4) doté d'un réseau de détecteurs et d'une longueur de détection (L) suivant un axe longitudinal (54), qui sert à détecter un premier motif (5, 5') et à générer un signal de détection et qui est intégré dans une première tête de détection (51),
• un premier motif 2D (5, 5') détectable par le premier capteur (4), qui s'étend dans la direction d'avance (F, Fx, Fy, Fz) et est composé d'éléments de motif (6, 6a-6f), le premier capteur (4) et le premier motif 2D (5, 5') étant mobiles l'un par rapport à l'autre dans la direction d'avance (F, Fx, Fy, Fz), et
• une unité de commande et d'évaluation (2) pour évaluer le signal de détection, dans lequel
• les éléments dé motif (6, 6a-6f) forment, par une disposition et/ou configuration différente d'une manière définie pour chaque position (P, Px, Py, Pz) suivant la direction d'avance (F, Fx, Fy, Fz), un premier mot code associé, lequel peut être détecté chaque fois au moins sur une partie de la longueur de détection (L) du premier capteur (4) et lequel code de manière absolue la position (P) respective, de sorte que le premier motif 2D (5, 5') forme une piste de codes de position absolue dans la direction d'avance (F, Fx, Fy, Fz),
• le signal de détection dans la position (P, Px, Py, Pz) respective correspond chaque fois au premier mot code,

**caractérisé en ce que**

• les informations suivantes sont enregistrées dans l'unité de commande et d'évaluation (2)

o une information de décodage à l'aide de laquelle une position absolue (P) peut être associée de façon univoque à chaque signal de détection, et
o des informations à l'aide desquelles, sur la base du premier mot code, une déviation du premier capteur (4) d'une position idéale (9, 10, 12) par rapport au premier motif 2D (5, 5') peut être déterminée dans la position (P, Px, Py, Pz) respective, à l'aide du signal de détection respectif, au moins en ce qui concerne un degré de liberté de mouvement.

**2.** Système (1) selon la revendication 1,
**caractérisé en ce que**
le premier capteur (4) est réalisé sous la forme d'un capteur linéaire (4).

**3.** Système (1) selon la revendication 1 ou 2,
**caractérisé en ce que**
l'axe longitudinal (54) du premier capteur ou capteur linéaire (4) est orienté sensiblement dans la direction d'avance (F, Fx, Fy, Fz) et les premiers mots code du premier motif 2D (5, 5') dans la direction d'avance (F, Fx, Fy, Fz) présentent des éléments de motif (6, 6a-6f) de disposition différente, en particulier d'inclinaison différente par rapport à la direction d'avance (F, Fx, Fy, Fz), et des périodicités d'éléments de motif différentes et/ou des éléments de motif (6, 6a-6f) de configuration différente.

**4.** Système (1) selon la revendication 3,
**caractérisé en ce que**
le premier motif 2D (5, 5') est divisé dans la direction d'avance (F, Fx, Fy, Fz) en une pluralité de zones adjacentes les unes aux autres (a1-ai) d'éléments de motif (6, 6a-6f) de disposition et/ou configuration différente, dans lequel

• les zones (a1-ai) présentent des longueurs de zone (d1-di) différentes dans la direction d'avance (F, Fx, Fy, Fz),
• chaque zone avec des éléments de motif d'une configuration et/ou disposition définie forme un type de zone et le premier motif 2D (5, 5') présente au moins deux types de zone (a1-ai) différents, et
• la longueur de détection (L) du premier capteur ou capteur linéaire (4) dans la direction d'avance (F, Fx, Fy, Fz) est adaptée aux longueurs de zone (d1-di) des zones (a1-ai) de sorte que le premier capteur ou capteur linéaire (4) puisse détecter dans toute position (P, Px, Py, Pz) en même temps des éléments de motif (6, 6a-6f) d'au moins deux zones (a1-ai), et

• la succession des types de zone des zones (a1-ai) pouvant être détectées sur une longueur de détection (L) sert à former un premier mot code respectif.

5. Système (1) selon la revendication 4,
   **caractérisé en ce que**

   • les zones (a1-ai) présentent au moins deux longueurs de zone (d1-di) différentes dans la direction d'avance (F, Fx, Fy, Fz), et
   • les longueurs de zone (d1-di), en particulier en combinaison avec la succession des types de zone, servent à former un premier mot code respectif,
   • le nombre de longueurs de zone (d1-di) différentes et le nombre de types de zone qui présentent le premier motif 2D (5, 5') étant choisis adaptés l'un à l'autre, en particulier premiers entre eux.

6. Système (1) selon l'une des revendications 3 à 5,
   **caractérisé en ce**
   **qu'**un deuxième capteur ou capteur linéaire (4a) pour détecter le premier motif 2D (5, 5'), orienté sensiblement dans la direction d'avance (F, Fx, Fy, Fz), est intégré dans la première tête de détection (51), le premier capteur ou capteur linéaire (4) et le deuxième capteur ou capteur linéaire (4a) étant disposés l'un par rapport à l'autre dans une position définie et enregistrée dans l'unité de commande et d'évaluation (2), avec une distance entre capteurs linaires D1-D3 définie dans la direction d'avance (F, Fx, Fy, Fz) qui est également enregistrée dans l'unité de commande et d'évaluation (2), en particulier les axes longitudinaux (54, 54a) des deux capteurs ou capteurs linéaires (4, 4a) étant orientés sensiblement parallèlement l'un à l'autre dans la direction d'avance (F, Fx, Fy, Fz).

7. Système (1) selon la revendication 1 ou 2,
   **caractérisé en ce**
   **qu'**un deuxième capteur ou capteur linéaire (4a) pour détecter le premier motif 2D (5, 5') est intégré dans la première tête de détection (51), dans lequel

   • l'axe longitudinal (54) du premier capteur ou capteur linéaire (4) et l'axe longitudinal (54a) du deuxième capteur linéaire (4a) sont orientés sensiblement orthogonalement à la direction d'avance (F, Fx, Fy, Fz) et
   • le premier capteur ou capteur linéaire (4) et le deuxième capteur ou capteur linéaire (4a) présentent dans la direction d'avance (F, Fx, Fy, Fz) une distance entre capteurs D définie qui est enregistrée dans l'unité de commande et d'évaluation (2), en particulier les axes longitudinaux (54, 54a) des deux capteurs ou capteurs linéaires (4, 4a) étant orientés sensiblement parallèlement l'un à l'autre,

   en particulier dans lequel dans l'unité de commande et d'évaluation (2) sont enregistrées des informations à l'aide desquelles, sur la base des signaux de détection du premier capteur ou capteur linéaire (4) et du deuxième capteur ou capteur linéaire (4a) correspondant à un premier mot code respectif, une déviation de la première tête de détection (51) d'une position idéale (9, 10, 12) par rapport au premier motif 2D (5, 5') peut être déterminée au moins en ce qui concerne un degré de liberté de mouvement, en particulier en ce qui concerne tous les degrés de liberté de mouvement.

8. Dispositif de mesure (60) comportant des éléments mobiles les uns par rapport aux autres le long d'une section de mesure (M),
   **caractérisé en ce**
   **qu'**un premier système (1) selon l'une des revendications précédentes est prévu et que la section de mesure (M) s'étend dans la direction d'avance (F, Fx, Fy, Fz) du système (1), le système (1) servant à déterminer la position relative des éléments les uns par rapport aux autres, en particulier le dispositif de mesure (60) étant réalisé sous la forme d'un codeur linéaire.

9. Dispositif de mesure (60) selon la revendication 8,
   **caractérisé en ce**
   **qu'**au moins un deuxième système (1a) selon l'une des revendications 1 à 7 est prévu, avec une deuxième tête de détection (51a) présentant au moins un capteur ou capteur linéaire (4, 4a) et un deuxième motif 2D (5a, 5a', 5a"), lequel présente des deuxièmes mots code pour déterminer une position absolue suivant la direction d'avance (F, Fx, Fy, Fz) et pour déterminer une déviation du capteur ou capteur linéaire (4, 4a) d'une position idéale (9, 10, 12) par rapport au deuxième motif 2D (5a, 5a', 5a"), dans lequel

• le premier motif 2D (5, 5') et le deuxième motif 2D (5a, 5a', 5a") s'étendent parallèlement l'un à l'autre dans la direction d'avance (F, Fx, Fy, Fz) et sont disposés en particulier dans des plans différents, les plans formant en particulier un angle de 90°±3°, et

• la première tête de détection (51) et la deuxième tête de détection (51a) sont mobiles en commun.

10. Dispositif de mesure (60) selon la revendication 9,
**caractérisé en ce que**
le premier système (1) présente plusieurs premiers motifs 2D (5, 5') identiques disposés l'un derrière l'autre dans la direction d'avance (F, Fx, Fy, Fz) et le deuxième système (1a) plusieurs deuxièmes motifs 2D (5a, 5a', 5a") identiques disposés l'un derrière l'autre dans la direction d'avance, en particulier le nombre de premiers mots code du premier motif 2D (5, 5') et le nombre de deuxièmes mots code du deuxième motif 2D (5a, 5a', 5a") étant premiers entre eux et présentant entre eux une différence dans les nombres de mots code, en particulier la différence des nombres de mots code étant choisie en fonction de tolérances de fabrication du dispositif de mesure (60), et/ou chaque combinaison de mots code en tant que combinaison d'un premier mot code du premier motif 2D (5, 5') et d'un deuxième mot code du deuxième motif 2D (5a, 5a', 5a") est biunivoque suivant la direction d'avance (F, Fx, Fy, Fz), et que dans une unité de commande et d'évaluation (2) du dispositif de mesure (60) sont enregistrées des informations à l'aide desquelles des combinaisons de mots code peuvent chaque fois être associées de façon univoque à une position de section de mesure, en particulier le nombre de premiers mots code du premier motif 2D (5, 5') et le nombre de deuxième mots code du deuxième motif 2D (5a, 5a', 5a") étant adaptés l'un à l'autre de façon à permettre de compenser des tolérances de fabrication du dispositif de mesure (60).

11. Dispositif de mesure (60) selon l'une des revendications 8 à 10,
**caractérisé en ce que**
le dispositif de mesure (60) est une machine de mesure de coordonnées 3D (20), le dispositif de mesure (60) présentant, pour déterminer la position relative des éléments les uns par rapport aux autres, chaque fois au moins un système (1) en ce qui concerne chaque axe de coordonnées.

12. Procédé de détermination de positions (P, Px, Py, Pz) suivant une direction d'avance (F, Fx, Fy, Fz) avec un système (1) selon la revendication 1, présentant les étapes suivantes :

• des éléments de motif (6, 6a-6f) du premier motif 2D (5, 5') sont détectés par le premier capteur (4) sur une longueur de détection (L),
• un signal de détection, qui correspond au premier mot code formé par les éléments de motif (6, 6a-6f) détectés, est généré,
• une position absolue (P, Px, Py, Pz) est associée au signal de détection à l'aide d'une information de décodage enregistrée dans l'unité de commande et d'évaluation (2), et
• en cas de déviations du signal de détection du signal idéal enregistré pour cette position, on détermine, à l'aide du signal de détection et à l'aide d'informations enregistrées dans l'unité de commande et d'évaluation (2) sur la base du premier mot code pour cette position (P, Px, Py, Pz), une déviation du premier capteur (4) d'une position idéale par rapport au premier motif 2D (5, 5') en ce qui concerne au moins un degré de liberté de mouvement (9, 10, 12).

13. Procédé selon la revendication 12,
**caractérisé en ce que**
pour déterminer la déviation d'une position idéale (7, 8, 9, 10), on résout un système mathématique de congruences linéaires construit à l'aide du premier mot code, en particulier en utilisant le théorème des restes chinois (Chinese remainder theorem).

14. Procédé selon la revendication 12 ou 13,
**caractérisé en ce**
**qu'**il est mis en oeuvre avec un dispositif de mesure (60) selon la revendication 11, dans lequel procédé

• le premier motif 2D (5, 5') et le deuxième motif 2D (5a, 5a', 5a") sont détectés en une seule étape, et
• une position de section de mesure absolue est déterminée de façon univoque au moyen d'une combinaison de mots code formée d'un premier mot code du premier motif 2D (5, 5') et d'un deuxième mot code du deuxième motif 2D (5a, 5a', 5a"), en particulier en résolvant un système mathématique de congruences linéaires construit à l'aide des deux mots code, en particulier en utilisant le théorème des restes chinois (Chinese remainder theorem).

**15.** Procédé selon l'une des revendications 12 à 14,
**caractérisé en ce**
**qu'**il est mis en oeuvre avec un dispositif de mesure (60) selon la revendication 10 et que la coordonnée 3D à mesurer est calculée à partir des positions absolues (P, Px, Py, Pz) déterminées pour chaque axe de coordonnées et des déviations de la position idéale (7, 8, 9, 10).

**16.** Produit-programme informatique qui est enregistré sur un support lisible par machine, ou signal de données informatiques, matérialisé par une onde électromagnétique, avec un code de programme pour commander ou mettre en oeuvre le procédé selon l'une des revendications 12 à 15.

$\mathcal{F}ig\,1$

a1    a2
F    5
6
34
L
P
16
4
13, 54
x
y

*Fig 2a*

54    5
16    a5
4    P
6    a4
d4
15c
a3
d3
15b
a2
d2
L
F    15a
a1
d1
x
y    a0

*Fig 2b*

*Fig 2c*

Fig 3a

Fig 3b

Fig 4a

Fig 4b

Fig 4c

*Fig 5a*

*Fig 5b*

Fig 6a

Fig 6b

$\mathcal{F}ig\,7$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6333511 B
- EP 0042179 A
- EP 1043571 A
- CH 704584